(19) Europäisches Patentamt
European Patent Office
Office européen des brevets

(11) EP 3 251 840 B1

# (12) EUROPEAN PATENT SPECIFICATION

(45) Date of publication and mention of the grant of the patent:
**07.06.2023 Bulletin 2023/23**

(21) Application number: **16743471.1**

(22) Date of filing: **28.01.2016**

(51) International Patent Classification (IPC):
***C09J 7/20*** (2018.01) ***C09J 7/24*** (2018.01)
***B29C 48/21*** (2019.01) ***B32B 27/08*** (2006.01)
***B32B 27/30*** (2006.01) ***B29C 51/10*** (2006.01)
***C09J 123/10*** (2006.01) ***C09J 129/14*** (2006.01)
***C09J 153/02*** (2006.01)

(52) Cooperative Patent Classification (CPC):
**B29C 48/21; B29C 51/10; B32B 27/08; B32B 27/302; B32B 27/308; C09J 7/20; C09J 7/24; C09J 123/10; C09J 129/14; C09J 153/02;**
B32B 2274/00

(86) International application number:
**PCT/JP2016/052489**

(87) International publication number:
**WO 2016/121868 (04.08.2016 Gazette 2016/31)**

## (54) MULTILAYER FILM

MEHRSCHICHTIGE FOLIE

FILM MULTICOUCHE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.01.2015 JP 2015014313**

(43) Date of publication of application:
**06.12.2017 Bulletin 2017/49**

(73) Proprietor: **Kuraray Co., Ltd.**
**Okayama 710-0801 (JP)**

(72) Inventors:
- **KAWAKITA, Hiroshi**
  **Tsukuba-shi**
  **Ibaraki 305-0841 (JP)**
- **NAKANO, Kirihiro**
  **Tsukuba-shi**
  **Ibaraki 305-0841 (JP)**
- **TAKEDA, Hideaki**
  **Tsukuba-shi**
  **Ibaraki 305-0841 (JP)**

(74) Representative: **Müller-Boré & Partner Patentanwälte PartG mbB**
**Friedenheimer Brücke 21**
**80639 München (DE)**

(56) References cited:
**EP-A1- 1 731 285**
**EP-A1- 2 610 305**
**EP-A1- 2 677 013**
**EP-A1- 2 985 313**
**WO-A1-2005/095081**
**WO-A1-2013/105392**
**WO-A1-2014/167868**
**JP-A- 2000 185 333**
**JP-A- 2005 111 765**
**JP-A- 2009 113 385**
**JP-A- 2012 077 177**
**JP-A- 2012 139 826**
**JP-A- 2014 168 940**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention relates to a multilayer film having an adhesive layer.

Components made of ceramics, metal, synthetic resin and the like with excellent durability, heat resistance and mechanical strength are widely used for a variety of applications including household appliances, electronic components, mechanical components, automotive components and the like. In applications such as appliance exteriors, wallpapers and automobile interiors, decorative films are often bonded to these materials to give a pattern such as a wood grain pattern, to provide a design feature such as a metallic tone or piano black tone, or to impart a function such as scratch resistance or weather resistance.

One method that is used for bonding decorative films to adherends having three-dimensional shapes is, for example, film insert molding, in which injection molding is performed with a decorative film set in a mold. In this method the decorative film must be press shaped in advance to fit the shape of the mold, and the method is also hard to apply to adherends made of metal, heat-curing resins and the like. Decorative methods that avoid this problem include vacuum molding methods such as three-dimensional surface decorative molding, but these face issues of productivity because they require adhesives.

To solve these problems, Patent Literature 1 for example proposes a film consisting of a thermoplastic polymer composition and having an adhesive property, and a method for manufacturing a molded body by using this film for insert molding. However, the molded body having this film has extremely poor conformability to three-dimensional shapes in vacuum molding, and breaks and wrinkles have occurred among other problems.

Patent Literature 2 for example proposes a multilayer film having a film composed of a methacrylate-based resin composition containing a block copolymer and a methacrylate-based resin and a film composed of an acrylate-based block copolymer, in which the toughness of the acrylic film is reportedly improved by including the block copolymer. However, this multilayer film has had a problem of poor adhesiveness to non-polar resins.

Patent Literature 3 proposes an acrylic-based resin film including a core-shell particle obtained by copolymerizing an alkyl methacrylate ester and an alkyl acrylate ester in the presence of a crosslinked particle of an alkyl acrylate ester polymer, wherein the core-shell particle is compounded in a methacrylic-based resin.

However, there is demand for an acrylic-based resin film that has even greater transparency, surface hardness, surface smoothness and extensibility and undergoes little whitening when heated. In particular, there is demand for a film that is easy to mold and has good overlaying formability on articles with three-dimensionally curved surfaces.

Patent Literature 1: Japanese Unexamined Patent Application Publication No. 2014-168940
Patent Literature 2: Japanese Unexamined Patent Application Publication No. 2012-213911
Patent Literature 3: Japanese Examined Patent Application Publication No. S56-27378

It is an object of the present invention to provide a multilayer film having an adhesive layer, capable of bonding easily to an adherend without breakage or wrinkles at a wide range of temperatures, and suitable for vacuum molding with excellent three-dimensional overlaying formability and adhesiveness after being formed into a three-dimensional overlay, together with a method for manufacturing the multilayer film and a method for manufacturing a molded body using the multilayer film.

The subject matter of the present invention is defined in the appended set of claims.

Because the multilayer film of the present invention has excellent three-dimensional overlaying formability and adhesiveness after being formed into a three-dimensional overlay, and can easily bond to an adherend without breakage or wrinkles at a wide range of temperatures, it is suited to decorating products that require design features.

The multilayer film of the present invention has an adhesive layer and a base layer. The thermoplastic polymer composition constituting the adhesive layer contains a thermoplastic elastomer (A). The thermoplastic elastomer (A) consists of a block copolymer or a hydrogenated copolymer having a polymer block (a1) containing an aromatic vinyl compound unit and a polymer block (a2) containing a conjugated diene compound unit.

Examples of the aromatic vinyl compound constituting the polymer block (a1) containing an aromatic vinyl compound unit include styrene, $\alpha$-methylstyrene, 2-methylstyrene, 3-methylstyrene, 4-methylstyrene, 4-propylstyrene, 4-cyclohexylstyrene, 4-dodecylstyrene, 2-ethyl-4-benzylstyrene, 4-(phenylbutyl)styrene, 1-vinylnaphthalene and 2-vinylnaphthalene, and one or two or more of these may constitute the polymer block. Of these, styrene, $\alpha$-methylstyrene and 4-methylstyrene are desirable from the standpoint of flowability.

The polymer block (a1) containing the aromatic vinyl compound unit contains the aromatic vinyl compound unit in the amount of preferably at least 80 mass%, or more preferably at least 90 mass%, or still more preferably at least 95 mass%. The polymer block (a1) containing the aromatic vinyl compound unit may also have another copolymerizable monomer unit in addition to the aromatic vinyl compound unit. Examples of this other copolymerizable monomer include 1-butene, pentene, hexene, butadiene, isoprene and methyl vinyl ether. When the polymer block (a1) containing the aromatic vinyl compound unit also contains another copolymerizable monomer unit, the ratio thereof is preferably not

more than 20 mass%, or more preferably not more than 10 mass%, or still more preferably not more than 5 mass% of the total amount of the aromatic vinyl compound unit and the other copolymerizable monomer unit.

The polymer block (a2) containing the conjugated diene compound unit is a polymer block containing an isoprene unit, a butadiene unit or isoprene/butadiene units in which 1,2 bonds and 3,4 bonds together constitute at least 40 mol% of the bonds. Preferably the block is made up of structural units derived from butadiene and/or isoprene, or especially preferably of structural units derived from butadiene and isoprene.

The form of binding of the conjugated diene compound units may be 1,2 binding and 1,4 binding in the case of butadiene, or 1,2 binding, 3,4 binding and 1,4 binding in the case of isoprene. In the polymer block (a2) consisting of the conjugated diene compound units, the ratio of the total amount of 1,2 binding and 3,4 binding as a percentage of the total amount of 1,2 binding, 3,4 binding and 1,4 binding is preferably in the range of 40 to 99 mol%, or more preferably 40 to 98 mol%, or still more preferably 40 to 90 mol%, or especially preferably 50 to 80 mol%. The relative amounts of 1,2 binding, 3,4 binding and 1,4 binding can be calculated from the integral values of the peaks in the range of 4.2 to 5.0 ppm attributable to 1,2 binding and 3,4 binding and the integral value of the peak in the range of 5.0 to 5.45 ppm attributable to 1,4 binding in the $^1$H-NMR spectrum.

The polymer block (a2) containing a conjugated diene compound unit includes preferably at least 80 mass%, or more preferably at least 90 mass%, or still more preferably at least 95 mass% of conjugated diene compound units (equivalent raw material charged amounts in all cases). The polymer block containing a conjugated diene compound unit may also have another copolymerizable monomer unit in addition to the conjugated diene compound unit. Examples of this other copolymerizable monomer include styrene, $\alpha$-methylstyrene and 4-methylstyrene. When another copolymerizable monomer unit is included, the ratio thereof is preferably not more than 20 mass%, or more preferably not more than 10 mass%, or still more preferably not more than 5 mass% of the total of the conjugated diene compound unit and the other copolymerizable monomer unit.

The form of binding of the polymer block (a1) containing an aromatic vinyl compound unit and the polymer block (a2) containing a conjugated diene compound unit in the thermoplastic elastomer (A) is not particularly limited, and may be linear, branched, radial or a combination of two or more of these binding forms. Of these, a linear binding form is preferred for ease of manufacture. Examples of linear binding forms include a diblock copolymer represented as a1-a2, a triblock copolymer represented as a1-a2-a1 or a2-a1-a2, a tetrablock copolymer represented as a1-a2-a1-a2, a pentablock copolymer represented as a1-a2-a1-a2-a1 or a2-a1-a2-a1 -a2, an (a1-a2)nX copolymer (in which X represents a coupling residue, and n represents an integer of 2 or greater), and mixtures of these. Of these, a triblock copolymer is preferred because it is easy to manufacture and has superior extensibility and adhesiveness, and a triblock copolymer represented by a1-a2-a1 is especially preferred.

From the standpoint of heat resistance and weather resistance, all or some of the polymer blocks (a2) containing the conjugated diene compound are preferably hydrogenated in the thermoplastic elastomer (A). The hydrogenation rate of the polymer blocks (a2) containing the conjugated diene compound is preferably at least 80%, or more preferably at least 90%. The hydrogenation rate is a value obtained by measuring the iodine value of the block copolymer before and after the hydrogenation reaction.

In the thermoplastic elastomer (A), the content of the polymer block (a1) containing the aromatic vinyl compound unit is preferably in the range of 5 to 75 mass%, or more preferably 5 to 60 mass%, or still more preferably 10 to 40 mass% of the total of the thermoplastic elastomer (A) from the standpoint of flexibility, extensibility and adhesiveness. The weight-average molecular weight of the thermoplastic elastomer (A) is preferably in the range of 30,000 to 500,000, or more preferably 60,000 to 200,000, or still more preferably 80,000 to 180,000 from the standpoint of extensibility, adhesiveness, and forming processability. The weight-average molecular weight here is the polystyrene equivalent value as determined by gel permeation chromatography (GPC). One kind of the thermoplastic elastomer (A) may be used alone, or a combination of two or more kinds may be used. A combination of a medium-molecular-weight elastomer with a weight-average molecular weight of 50,000 to 150,000 with a high-molecular-weight elastomer with a weight-average molecular weight of 150,000 to 300,000 is desirable for obtaining a good balance of extensibility, adhesiveness and forming processability. The mass ratio of the medium-molecular-weight elastomer to the high-molecular-weight elastomer is preferably in the range of 10/90 to 90/10, or more preferably 20/80 to 75/25, or still more preferably 20/80 to 55/45.

The method for manufacturing the thermoplastic elastomer (A) is not particularly limited, and it can be manufactured for example by anionic polymerization. Specifically, it can be manufactured by (i) a method in which the aromatic vinyl compound and conjugated diene compound are sequentially polymerized using an alkyl lithium compound as an initiator; (ii) a method in which the aromatic vinyl compound and conjugated diene compound are sequentially polymerized using an alkyl lithium compound as an initiator, after which a coupling agent is added to perform coupling; and (iii) a method in which the conjugated diene compound and the aromatic vinyl compound are sequentially polymerized using a dilithium compound as an initiator.

The alkyl lithium compound in (i) and (ii) above may be methyl lithium, ethyl lithium, n-butyl lithium, sec-butyl lithium, tert-butyl lithium or pentyl lithium for example. The coupling agent in (ii) above may be dichloromethane, dibromomethane, dichloroethane, dibromoethane or dibromobenzene for example. The dilithium compound in (iii) above may

be naphthalene dilithium or dilithiohexylbenzene for example.

The amounts of these alkyl lithium compounds, dilithium compounds and other initiators and coupling agents that are used may be determined according to weight-average molecular weight of the target thermoplastic elastomer (A), but normally the amount of the initiator is in the range of 0.01 to 0.2 mass parts and the amount of the coupling agent is in the range of 0.001 to 0.8 mass parts per 100 mass parts of the combined aromatic vinyl compound and conjugated diene compound. The anionic polymerization described above is preferably performed in the presence of a solvent. The solvent may be any that is inactive with respect to the initiator and does not adversely affect polymerization, without any particular limitations, and examples include saturated aliphatic hydrocarbons such as hexane, heptane, octane and decane; and aromatic hydrocarbons such as toluene, benzene and xylene. Polymerization is preferably performed for 0.5 to 50 hours within a temperature range of 0°C to 80°C.

The ratios of 1,2 binding and 3,4 binding in the thermoplastic elastomer (A) can be increased by adding an organic Lewis base during anionic polymerization, and the ratios of 1,2 binding and 3,4 binding can be easily controlled by varying the added amount of this organic Lewis base. Examples of the organic Lewis base include esters such as ethyl acetate; amines such as triethylamine, N,N,N',N'-tetramethylethylenediamine and N-methylmorpholine; nitrogen-containing heterocyclic aromatic compounds such as pyridine; amides such as dimethylacetamide; ethers such as dimethyl ether, diethyl ether, tetrahydrofuran and dioxane; glycol ethers such as ethylene glycol dimethyl ether and diethylene glycol dimethyl ether; sulfoxides such as dimethyl sulfoxide; and ketones such as acetone and methyl ethyl ketone.

Following polymerization by the methods described above, the reaction solution can be poured into a weak solvent for the block copolymer to coagulate the block copolymer contained in the reaction solution, or else the reaction liquid can be poured together with steam into hot water to remove the solvent azeotropically (steam stripping), and then dried to isolate the non-hydrogenated thermoplastic elastomer (A). This non-hydrogenated thermoplastic elastomer (A) can then be subjected to a hydrogenation reaction to obtain a hydrogenated thermoplastic elastomer (A). In the hydrogenation reaction, hydrogen is reacted in the presence of a hydrogenation catalyst either with a solution of the non-hydrogenated thermoplastic elastomer (A) and a solvent that is inactive with respect the reaction and the hydrogenation catalyst, or with the non-hydrogenated thermoplastic elastomer (A) which has not been isolated from the reaction solution. Examples of the hydrogenation catalyst include Raney nickel; unhindered catalysts including metals such as Pt, Pd, Ru Rh and Ni carried on carriers of carbon, alumina, diatomaceous earth and the like; Ziegler catalysts formed from a combination of a transition metal compound with an alkyl aluminum compound, alkyl lithium compound or the like; and metallocene catalysts. The hydrogenation reaction can normally be performed under conditions of hydrogen pressure 0.1 to 20 MPa, reaction temperature 20°C to 250°C, and reaction time 0.1 to 100 hours. The hydrogenated thermoplastic elastomer (A) can also be isolated either by pouring the hydrogenation reaction solution into a weak solvent such as methanol to coagulate it, or by pouring the hydrogenation reaction solution together with steam into hot water to remove the solvent azeotropically (steam stripping), and then drying the solution.

The thermoplastic polymer composition also contains an adhesion imparting component (B). The adhesion imparting component (B) is a polyvinyl acetal resin (B1) and/or a polar group-containing polypropylene-based resin (B2), or preferably a polyvinyl acetal resin (B1) and/or a carboxylic acid-modified polypropylene-based resin.

The content of the adhesion imparting component (B) is in the range of 10 to 100 mass parts per 100 mass parts of the thermoplastic elastomer (A). The content is preferably at least 12 mass parts, or more preferably at least 15 mass parts, and preferably not more than 70 mass parts, or more preferably not more than 50 mass parts. Thus, the content of the adhesion imparting component (B) is preferably 10 to 70 mass parts, or more preferably 12 to 70 mass parts, or still more preferably 15 to 70 mass parts, or yet more preferably 15 to 50 mass parts, or especially preferably 15 to 45 mass parts per 100 mass parts of the thermoplastic elastomer (A). If the content of the adhesion imparting component (B) is less than 10 mass parts, adhesiveness tends to be less, while if it exceeds 100 mass parts the flexibility and adhesiveness of the thermoplastic polymer composition tend to be less.

The polyvinyl acetal resin (B1) normally has a repeating unit represented by Formula (1) below.

Formula (1)

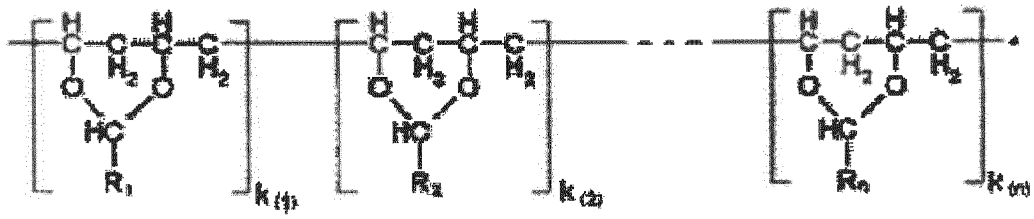

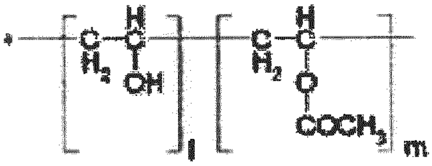

(1)

In Formula (1) above, "n" represents the number of types of aldehyde used in the acetalization reaction. R1, R2, ..., Rn represent hydrogen atoms or alkyl residues of the aldehydes used in the acetalization reaction, and k(1), k(2), ..., k(n) represent the proportions (substance ratios) of each constituent unit in square brackets. "1" represents the proportion (substance ratio) of vinyl alcohol units, and "m" represents the proportion (substance ratio) of vinyl acetal units. However, k(1) + k(2) + ... + k(n) + 1 + m = 1, and any of k(1), k(2), ..., k(n), "1" and "m" may be zero. Each repeating unit is not particularly limited to the sequence order given above, and the units may be in a random sequence, or in a block sequence or tapered sequence.

The polyvinyl acetal resin (B1) is obtained for example by reacting a polyvinyl alcohol with an aldehyde. The average degree of polymerization of the polyvinyl alcohol used in manufacturing the polyvinyl acetal resin (B1) is preferably 100 to 4,000, or more preferably 100 to 3,000, or still more preferably 100 to 2,000, or especially preferably 250 to 2,000. If the average degree of polymerization of the polyvinyl alcohol is at least 100 the polyvinyl acetal resin (B1) has good productivity and handling properties, while if it is not more than 4,000 the melt viscosity does not become too high during melt kneading, and the thermoplastic polymer composition is easier to manufacture. The average degree of polymerization of the polyvinyl alcohol here is a value measured in accordance with JIS K 6726, and is determined from the intrinsic viscosity as measured in water at 30°C after the polyvinyl alcohol has been resaponified and purified.

There are no particular limitations on the method of manufacturing the polyvinyl alcohol, which may be produced for example by saponifying polyvinyl acetate or the like with an alkali, acid, ammonia water or the like. A commercial product may also be used. An example of a commercial product is the Kuraray Poval series manufactured by Kuraray Co., Ltd. The polyvinyl alcohol may have been completely saponified or partly saponified. From the standpoint of compatibility and stability, the degree of saponification is preferably at least 80 mol%, or more preferably at least 90 mol%, or still more preferably at least 95 mol%.

A vinyl alcohol such as an ethylene-vinyl alcohol copolymer or partially saponified ethylene-vinyl alcohol copolymer, a copolymer of monomer copolymerizable with such a vinyl alcohol, or a modified polyvinyl alcohol with carboxylic acid or the like introduced into a part thereof may be used as the polyvinyl alcohol. One of these kinds of polyvinyl alcohol alone or a combination of two or more kinds may be used.

The aldehyde used in manufacturing the polyvinyl acetal resin (B 1) is not particularly limited. Examples include formaldehyde (including paraformaldehyde), acetaldehyde (including paraacetaldehyde), propionaldehyde, n-butyraldehyde, isobutyraldehyde, pentanal, hexanal, heptanal, n-octanal, 2-ethylhexylaldehyde, cyclohexanecarbaldehyde, furfural, glyoxal, glutaraldehyde, benzaldehyde, 2-methylbenzaldehyde, 3-methylbenzaldehyde, 4-methylbenzaldehyde, p-hydroxybenzaldehyde, m-hydroxybenzaldehyde, phenylacetaldehyde and β-phenylpropionaldehyde, and one of these alone or a combination of two or more may be used. Of these aldehydes, butyraldehyde is preferred and n-butyraldehyde is especially preferred from the standpoint of ease of manufacture.

The polyvinyl acetal resin (B 1) is preferably a polyvinyl acetal resin (B 1) obtained by acetalizing a polyvinyl alcohol with n-butyraldehyde. Of the acetal units in the polyvinyl acetal resin (B1), the ratio of butyral units is preferably at least 0.8, or more preferably at least 0.9, or still more preferably at least 0.95.

The degree of acetalization of the polyvinyl acetal resin (B1) used in the present invention is in the range of preferably 55 to 88 mol%, or more preferably 60 to 88 mol%, or still more preferably 70 to 88 mol%, or especially preferably 75 to 85 mol%. A polyvinyl acetal resin (B 1) with a degree of acetalization of at least 55 mol% is inexpensive to manufacture and easy to obtain, and has good melt processability. On the other hand, a polyvinyl acetal resin (B 1) with a degree of acetalization of not more than 88 mol% is extremely easy to manufacture, and economical because the acetalization reaction is not time-consuming. Adhesiveness is excellent if the degree of acetalization of the polyvinyl acetal resin (B 1) is not more than 88 mol%, while if it is at least 55 mol% the resin has good affinity and compatibility

with the thermoplastic elastomer (A), giving the resulting thermoplastic polymer composition both excellent extensibility and good adhesive strength.

The degree of acetalization (mol%) of the polyvinyl acetal resin (B 1) is defined by the following formula.

$$\text{Degree of acetalization (mol\%)} = \{k(1) + k(2) + ... + k(n)\} \times 2/\{\{k(1) + k(2) + ...+ k(n)\} \times 2 + l + m\} \times 100$$

The degree of acetalization of the polyvinyl acetal resin (B1) is determined by the method described in JIS K 6728 (1977).

From the standpoint of affinity with the thermoplastic elastomer (A), the content "1" of vinyl alcohol units in the polyvinyl acetal resin (B1) is in the range of preferably 12 to 45 mol%, or more preferably 12 to 40 mol%, while the content of vinyl acetate units is in the range of preferably 0 to 5 mol%, or more preferably 0 to 3 mol%.

The reaction between the polyvinyl alcohol and the aldehyde (acetalization reaction) may be performed by known methods. Examples include a water-mediated method in which an acetalization reaction is performed on an aldehyde and an aqueous solution of a polyvinyl alcohol in the presence of an acid catalyst to precipitate particles of the polyvinyl acetal resin (B1), and a solvent-mediated method in which a polyvinyl alcohol is dispersed in an organic solvent and subjected to an acetalization reaction with an aldehyde in the presence of an acid catalyst, after which water (a poor solvent for the polyvinyl acetal resin (B 1)) or the like is mixed with the resulting reaction mixture to precipitate the polyvinyl acetal resin (B1). The acid catalyst is not particularly limited, and examples include organic acids such as acetic acid and p-toluenesulfonic acid; inorganic acids such as nitric acid, sulfuric acid and hydrochloric acid; gases such as carbon dioxide that are acidic in aqueous solution; and solid acid catalysts such as cation exchange resins and metal oxides.

A slurry consisting of a reaction mixture of a polyvinyl alcohol and an aldehyde prepared by a water-mediated method, solvent-mediated method or the like is normally acidic, so the pH of this slurry is preferably adjusted to the range of 5 to 9, or more preferably 6 to 8 in order to reduce the effects on subsequent reactions. Methods of adjusting the pH include repeated water washing of the slurry; addition of a neutralizing agent to the slurry; and addition of an alkylene oxide or the like to the slurry. Examples of the compound used to adjust the pH include alkali metal hydroxides such as sodium hydroxide and potassium hydroxide; alkali metal acetates such as sodium acetate; alkali metal carbonates such as sodium carbonate and potassium carbonate; alkali metal hydrogencarbonates such as sodium hydrogencarbonate; and ammonia and aqueous ammonia solutions. Examples of alkylene oxides include ethylene oxide and propylene oxide, and a glycidyl ether such as ethylene glycol diglycidyl ether may also be used.

There are no particular limits on the methods for removing the salts produced by pH adjustment, the residue from the reaction with the aldehyde and the like. Preferably when the polyvinyl acetal resin (B 1) is processed into a powder, granules or pellets it is deaerated under reduced pressure to reduce the reaction residue, moisture content and the like.

From the standpoint of adhesiveness, the polar group-containing polypropylene-based resin (B2) is preferably a polypropylene containing a carboxyl group as a polar group, or in other words a carboxylic acid-modified polypropylene-based resin, and more preferably it is a maleic acid-modified polypropylene-based resin or maleic anhydride-modified polypropylene-based resin. The polar group of the polar group-containing polypropylene-based resin (B2) may be a (meth)acryloyloxy group; a hydroxyl group; an amido group; a halogen atom such as a chlorine atom; a carboxyl group; or an acid anhydride group for example.

The method for manufacturing the polar group-containing polypropylene-based resin (B2) is not particularly limited, and it may be obtained by random copolymerizing, block copolymerizing or graft copolymerizing propylene with a polar group-containing copolymerizable monomer by known methods, or by oxidizing or chlorinating a polypropylene-based resin by known methods. Of these methods, random copolymerization and graft copolymerization are preferred because they allow precise control of the molecular weight distribution, and graft copolymerization is especially preferred.

Examples of the polar group-containing copolymerizable monomer include vinyl acetate, vinyl chloride, ethylene oxide, propylene oxide, acrylamide, unsaturated carboxylic acids and esters and anhydrides thereof. Of these, an unsaturated carboxylic acid or ester or anhydride thereof is preferred. Examples of unsaturated carboxylic acids and their esters and anhydrides include (meth)acrylic acid, (meth)acrylic acid esters, maleic acid, maleic anhydride, fumaric acid, itaconic acid, itaconic anhydride, himic acid and himic anhydride. Of these, maleic acid or maleic anhydride is especially preferred from the standpoint of adhesiveness. One of these polar group-containing copolymerizable monomers may be used alone, or two or more may be combined.

Examples of the (meth)acrylic esters given as examples of the polar group-containing copolymerizable monomer include acrylic acid alkyl esters such as methyl acrylate, ethyl acrylate, n-propyl acrylate, isopropyl acrylate, n-butyl acrylate, isobutyl acrylate, n-hexyl acrylate, isohexyl acrylate, n-octyl acrylate, isooctyl acrylate and 2-ethylhexyl acrylate;

and methacrylic acid alkyl esters such as methyl methacrylate, ethyl methacrylate, n-propyl methacrylate, isopropyl methacrylate, n-butyl methacrylate, isobutyl methacrylate, n-hexyl methacrylate, isohexyl methacrylate, n-octyl methacrylate, isooctyl methacrylate and 2-ethylhexyl methacrylate. One of these (meth)acrylic esters alone or a combination of two or more may be used.

The polar group-containing polypropylene-based resin (B2) may also be obtained by copolymerizing a polar group-containing copolymerizable monomer with both propylene and an α-olefin other than propylene. Examples of this α-olefin include ethylene, 1-butene, 1-pentene, 1-hexene, 1-octene, 4-methyl-1-pentene and cyclohexene. This α-olefin may be copolymerized with the polar group-containing copolymerizable monomer by known methods, such as random copolymerization, block copolymerization or graft copolymerization. From the standpoint of affinity with the thermoplastic elastomer (A), the ratio of structural units derived from the α-olefin other than propylene as a percentage of the total structural units of the polar group-containing polypropylene-based resin (B2) is in the range of preferably 0 to 45 mol%, or more preferably 0 to 35 mol%, or still more preferably 0 to 25 mol%.

The polar group of the polar group-containing polypropylene-based resin (B2) may be subject to post-processing after polymerization. For example, they may be neutralized with a metal ion of a (meth)acrylic acid group or a carboxyl group to produce ionomers, or esterified with methanol, ethanol or the like. Hydrolysis of vinyl acetate may be another option.

The melt flow rate (MFR) of the polar group-containing polypropylene-based resin (B2) is in the range of preferably 0.1 to 300 g/10 min, or more preferably 0.1 to 100 g/10 min, or still more preferably 1 to 15 g/10 min under conditions of 230°C, load 2.16 kg (21.18 N). If the MFR of the polar group-containing polypropylene-based resin (B2) under these conditions is at least 0.1 g/10 min, the thermoplastic polymer composition has excellent forming processability, while if it is not more than 300 g/10 min the thermoplastic polymer composition has excellent extensibility. From the standpoint of heat resistance and adhesiveness, the melting point of the polar group-containing polypropylene-based resin (B2) is in the range of preferably 100°C to 180°C, or more preferably 110°C to 170°C, or still more preferably 120°C to 145°C.

The ratio of the polar group-containing structural units as a percentage of the total structural units of the polar group-containing polypropylene-based resin (B2) is in the range of preferably 0.01 to 10 mass%, or more preferably 0.01 to 5 mass%, or still more preferably 0.2 to 1 mass%. If the ratio of the polar group-containing structural units is at least 0.01 mass%, adhesiveness to the adherend is high, while if it is not more than 10 mass% affinity with the thermoplastic elastomer (A) is improved, resulting in better extensibility and adhesiveness and suppressing gel formation. To optimize the ratio of polar group-containing structural units, a highly-concentrated polar group-containing polypropylene-based resin with a high ratio of polar group-containing structural units may be diluted with a polypropylene-based resin containing no polar group-containing structural units, and used as the polar group-containing polypropylene-based resin (B2).

From the standpoint of forming processability, extensibility and adhesiveness, the thermoplastic polymer composition preferably contains a polar group-containing polyolefinic copolymer (C) in addition to the polar group-containing polypropylene-based resin (B2).

The content of the polar group-containing polyolefin-based copolymer (C) in the thermoplastic polymer composition is in the range of preferably 5 to 100 mass parts, or more preferably 20 to 70 mass parts, or still more preferably 35 to 60 mass parts per 100 mass parts of the thermoplastic elastomer (A). If the content of the polar group-containing polyolefin-based copolymer (C) is at least 5 mass parts, adhesiveness tends to be good at temperatures of not more than 190°C, while if it is not more than 100 mass parts, flexibility and extensibility tend to be good.

The polar group-containing polyolefin-based copolymer (C) is preferably a polyolefin-based copolymer including an olefin-based copolymerizable monomer and a polar group-containing copolymerizable monomer. Examples of the olefin-based copolymerizable monomer include ethylene, 1-butene, 1-pentene, 1-hexene, 1-octene, 4-methyl-1-pentene and cyclohexene. One of these may be used alone, or two or more may be combined. Of these, ethylene is preferred from the standpoint of adhesiveness.

Examples of the polar group of the polar group-containing polyolefin-based copolymer (C) include an ester group, hydroxyl group, carboxyl group, acid anhydride group or amido group, or a halogen atom such as a chlorine atom, and examples of the polar group-containing copolymerizable monomer include (meth)acrylic esters, (meth)acrylic acid, vinyl acetate, vinyl chloride, ethylene oxide, propylene oxide and acrylamide. One of these polar group-containing copolymerizable monomers may be used alone, or two or more may be combined. Of these, a (meth)acrylic ester is preferred from the standpoint of adhesiveness.

Examples of (meth)acrylic esters that are preferred as the polar group-containing copolymerizable monomer include acrylic acid alkyl esters such as methyl acrylate, ethyl acrylate, n-propyl acrylate, isopropyl acrylate, n-butyl acrylate, isobutyl acrylate, n-hexyl acrylate, isohexyl acrylate, n-octyl acrylate, isooctyl acrylate and 2-ethylhexyl acrylate; and methacrylic acid alkyl esters such as methyl methacrylate, ethyl methacrylate, n-propyl methacrylate, isopropyl methacrylate, n-butyl methacrylate, isobutyl methacrylate, n-hexyl methacrylate, isohexyl methacrylate, n-octyl methacrylate, isooctyl methacrylate and 2-ethylhexyl methacrylate, and one of these alone or a combination or two or more may be used. Of these, an acrylic acid alkyl ester is preferred for obtaining strong adhesiveness even with heat treatment

at temperatures of 190°C or less, methyl acrylate and ethyl acrylate are especially preferred, and methyl acrylate is especially still more preferred.

The form of polymerization of the polar group-containing polyolefin-based copolymer (C) is not particularly limited. Moreover, the polar groups of the polar group-containing polyolefinic copolymer (C) may also be post-processed after polymerization.

The MFR of the polar group-containing olefin-based copolymer (C) under conditions of 190°C, load 2.16 kg (21.18 N) is in the range of preferably 0.1 to 100 g/10 min, or more preferably 0.1 to 70 g/10 min, or still more preferably 1 to 30 g/10 min, or yet more preferably 1 to 20 g/10 min. If the MFR of the polar group-containing polyolefin-based copolymer (C) is at least 0.1 g/10 min, adequate adhesiveness is obtained even with heat treatment at 190°C or less, while if it is not more than 100 g/10 min manufacturing is easier, and excellent extensibility and adhesiveness are obtained.

The Vicat softening point of the polar group-containing polyolefin-based copolymer (C) is in the range of preferably 40°C to 100°C, or more preferably 45°C to 55°C. If the Vicat softening point of the polar group-containing polyolefin-based copolymer (C) is at least 40°C, the thermoplastic polymer composition gains good extensibility and adhesiveness, while if it is not more than 100°C excellent adhesiveness is obtained even with heat treatment at 190°C or less.

The ratio of the polar group-containing structural units as a percentage of the total structural units of the polar group-containing polyolefin-based copolymer (C) is in the range of preferably 1 to 99 mass%, or more preferably 1 to 50 mass%, or still more preferably 5 to 30 mass%. If the ratio of the polar group-containing structural units is within this range, good affinity and compatibility are obtained not only with the thermoplastic elastomer (A) but also with the adhesion imparting component (B), giving the thermoplastic polymer composition good extensibility and adhesiveness and increasing the adhesiveness on the adherend. If the ratio of the polar group-containing structural units is too low, the extensibility of the thermoplastic polymer composition tends to be less, while if the ratio is too high, affinity and compatibility with the thermoplastic elastomer (A) tend to be lower.

The thermoplastic polymer composition may also contain a tackifier resin (D). Forming processability can be further improved while maintaining adhesiveness if a tackifier resin (D) is included. The tackifier resin (D) may be an aliphatic unsaturated hydrocarbon resin, aliphatic saturated hydrocarbon resin, alicyclic unsaturated hydrocarbon resin, alicyclic saturated hydrocarbon resin, aromatic hydrocarbon resin, hydrogenated aromatic hydrocarbon resin, rosin ester resin, hydrogenated rosin ester resin, terpene phenol resin, hydrogenated terpene phenol resin, terpene resin, hydrogenated terpene resin, aromatic hydrocarbon-modified terpene resin, coumarone-indene resin, phenol resin or xylene resin for example, and one of these alone or a combination of two or more may be used. Of these, an aliphatic saturated hydrocarbon resin, alicyclic saturated hydrocarbon resin, hydrogenated aromatic hydrocarbon resin or hydrogenated terpene resin is preferred, and a hydrogenated aromatic hydrocarbon resin or hydrogenated terpene resin is especially preferred.

The softening point of the tackifier resin (D) is in the range of preferably 50°C to 200°C, or more preferably 65°C to 180°C, or still more preferably 80°C to 160°C. If the softening point is at least 50°C the multilayer film can maintain adhesiveness at the temperatures at which the molded body of the present invention is used, while if it is not more than 200°C it can maintain adhesiveness at the heat processing temperature during adhesion. The softening point here is a value measured in accordance with ASTM 28-67.

When the tackifier resin (D) is included in the thermoplastic polymer composition, the content thereof is preferably in the range of 1 to 100 mass parts, or more preferably 5 to 70 mass parts, or still more preferably 10 to 45 mass parts per 100 mass parts of the thermoplastic elastomer (A) from the standpoint of flexibility and extensibility.

The thermoplastic polymer composition may also contain a softener (S). Examples of this softener (S) include softeners commonly used in rubber and plastics, represented by paraffin-based, naphthene-based and aromatic-based process oils; phthalic acid derivatives such as dioctyl phthalate and dibutyl phthalate; and white oil, mineral oil, oligomers of ethylene and $\alpha$-olefins, paraffin wax, fluid paraffin, polybutene, low-molecular-weight polybutadiene and low-molecular-weight polyisoprene. Of these a process oil is preferred, and a paraffin-based process oil is especially preferred. It is also possible to use known softeners commonly used in combination with polyvinyl acetal resins, including organic acid ester-based plasticizers such as monobasic organic acid esters and polybasic organic acid esters, and phosphate-based plasticizers such as organic phosphoric acid esters and organic phosphorous acid esters.

Examples of basic organic acid esters include esters of alcohols with polybasic organic acids such as adipic acid, sebacic acid and azelaic acid; and glycol-based esters obtained by reactions between glycols such as triethylene glycol, tetraethylene glycol and tripropylene glycol and monobasic organic acids such as butyric acid, isobutyric acid, caproic acid, 2-ethylbutyric acid, heptylic acid, n-octylic acid, 2-ethylhexylic acid, pelargonic acid (n-nonylic acid) and decylic acid, of which typical examples are triethylene glycol-di-caproic acid ester, triethylene glycol-di-2-ethylbutyric acid ester, triethylene glycol-di-n-octylic acid ester and triethylene glycol-di-2-ethylhexylic acid ester. Examples of polybasic organic acid esters include sebacic acid dibutyl ester, azelaic acid dioctyl ester and adipic acid dibutylcarbitol ester. Examples of organic phosphoric acid esters include tributoxyethyl phosphate, isodecylphenyl phosphate and triisopropyl phosphate. One kind of the softening agent (S) alone or a combination of two or more kinds may be used.

From the standpoint of forming processability and adhesiveness, the content of the softening agent (S) in the

thermoplastic polymer composition is in the range of preferably 0.1 to 300 mass parts, or more preferably 1 to 200 mass parts, or still more preferably 10 to 200 mass parts, or especially preferably 50 to 150 mass parts per 100 mass parts of the thermoplastic elastomer (A).

The thermoplastic polymer composition may also contain another thermoplastic polymer such as an olefin-based polymer, styrene-based polymer, polphenylene ether-based resin or polyethylene glycol. Examples of olefin-based polymers include block copolymers and random copolymers of polyethylene, polypropylene, polybutene and propylene with other α-olefins such as ethylene and 1-butene. When another thermoplastic polymer is included, the content thereof is preferably not more than 100 mass parts, or more preferably not more than 50 mass parts, or still more preferably not more than 2 mass parts per 100 mass parts of the thermoplastic elastomer (A).

From the standpoint of heat resistance, weather resistance and hardness adjustment, the thermoplastic polymer composition may also contain an inorganic filler. Examples of the inorganic filler include calcium carbonate, talc, magnesium hydroxide, aluminum hydroxide, mica, clay, natural silicic acid, synthetic silicic acid, titanium oxide, carbon black, barium sulfate, glass microspheres and glass fiber, and one of these alone or a combination of two or more may be used. When an inorganic filler is included, the content thereof is preferably within a range that does not adversely affect the flexibility of the thermoplastic polymer composition, or preferably not more than 10 mass parts, or more preferably not more than 5 mass parts, or still more preferably not more than 2 mass parts per 100 mass parts of the thermoplastic elastomer (A).

The thermoplastic polymer composition may also contain an antioxidant, lubricant, light stabilizer, processing aid, pigment, dye or other coloring agent, flame retardant, antistatic agent, matting agent, silicon oil, anti-blocking agent, UV absorber, release agent, blowing agent, antibacterial agent, antifungal agent, perfume or the like. Examples of antioxidants include hindered phenol-based, phosphorus-based, lactone-based and hydroxyl-based antioxidants. Of these, a hindered phenol-based antioxidant is preferred. When an antioxidant is included, the content thereof is preferably within a range that does not cause discoloration when the resulting thermoplastic polymer composition is melt kneaded, and is preferably in the range of 0.1 to 5 mass parts per 100 mass parts of the thermoplastic elastomer (A).

The method for preparing the thermoplastic polymer composition is not particularly limited as long as it allows uniform mixing of the included components, and an ordinary melt kneading method may be used. Melt kneading may be accomplished with a melt kneading apparatus such as a single-screw extruder, twin-screw extruder, kneader, batch mixer, roller or Bunbury mixer, and preferably the thermoplastic polymer composition is obtained by melt kneading at a temperature in the range of 170°C to 270°C.

The hardness of the thermoplastic polymer composition as measured by the JIS-A method of JIS K 6253 is preferably not more than 90, or more preferably in the range of 30 to 90, or still more preferably in the range of 35 to 85. The flexibility and elastic modulus tend to be lower if the hardness exceeds 90.

The MFR of the thermoplastic polymer composition is preferably 1 to 50 g/10 min, or more preferably 1 to 40 g/10 min, or still more preferably 2 to 30 g/10 min as measured under conditions of 230°C, load 2.16 kg (21.18 N) by methods conforming to JIS K 7210. Within this range of MFR, forming processability is good and the adhesive layer is easy to prepare.

The thickness of the adhesive layer is in the range of preferably 10 to 500 μm, or more preferably 30 to 190 μm, or still more preferably 50 to 150 μm. Adhesiveness declines if the thickness of the adhesive layer is less than 10 μm, while if it exceeds 500 μm, the handling properties, surface hardness and excipiency tend to be poor.

The adhesive strength of the thermoplastic polymer composition is preferably at least 20 N/25 mm, or more preferably at least 30 N/25 mm, or still more preferably at least 60 N/25 mm. Adhesive strength here is a value measured by the methods described in the examples in accordance with JIS K 6854-2.

The amorphous resin constituting the base layer must have an elastic modulus of 2 to 600 MPa at an arbitrary temperature of 110°C to 160°C. If the elastic modulus is less than 2 MPa, elongation during vacuum molding tends not to be uniform, while if it exceeds 600 MPa, cracks and breakage tend to occur during vacuum molding. The elastic modulus is expressed in [MPa] units with the first decimal place rounded off. An "amorphous resin" in this Description is a resin that does not exhibit a clear melting point in a differential scanning calorimetry (DSC) curve.

Examples of amorphous resins include polystyrene resin, polyvinyl chloride resin, acrylonitrile styrene resin, acrylonitrile butadiene styrene resin, polycarbonate resin and methacrylic-based resins. Of these, a methacrylic-based resin is preferred from the standpoint of transparency, weather resistance, surface glossiness and abrasion resistance, and a methacrylic-based resin containing the methacrylic-based resin (F) and the elastic body (R) is more preferred.

The methacrylic-based resin preferably contains 10 to 99 mass parts of the methacrylic-based resin (F) and 90 to 1 mass parts of the elastic body (R), or more preferably 55 to 90 mass parts of the methacrylic-based resin (F) and 45 to 10 mass parts of the elastic body (R), or still more preferably 70 to 90 mass parts of the methacrylic-based resin (F) and 30 to 10 mass parts of the elastic body (R). If the content of the methacrylic-based resin (F) is less than 10 mass parts, the surface hardness of the resulting base layer tends to decline.

A structural unit derived from methyl methacrylate preferably constitutes at least 80 mass%, or more preferably at least 90 mass% of the methacrylic-based resin (F). In other words, structural units not derived from methyl methacrylate

preferably constitute not more than 20 mass%, or more preferably not more than 10 mass% of the methacrylic-based resin (F), which may be a polymer having methyl methacrylate as its sole monomer.

Such monomers other than methyl methacrylate include acrylic acid esters such as methyl acrylate, ethyl acrylate, n-propyl acrylate, isopropyl acrylate, n-butyl acrylate, isobutyl acrylate, s-butyl acrylate, tert-butyl acrylate, amyl acrylate, isoamyl acrylate, n-hexyl acrylate, 2-ethylhexyl acrylate, pentadecyl acrylate, dodecyl acrylate, phenyl acrylate, benzyl acrylate, phenoxyethyl acrylate, 2-hydroxyethyl acrylate, 2-ethoxyethyl acrylate, glycidyl acrylate, allyl acrylate, cyclohexyl acrylate, norbornenyl acrylate and isobonyl acrylate; methacrylic acid esters other than methyl methacrylate, such as ethyl methacrylate, n-propyl methacrylate, isopropyl methacrylate, n-butyl methacrylate, isobutyl methacrylate, s-butyl methacrylate, tert-butyl methacrylate, amyl methacrylate, isoamyl methacrylate, n-hexyl methacrylate, 2-ethylhexyl methacrylate, pentadecyl methacrylate, dodecyl methacrylate, phenyl methacrylate, benzyl methacrylate, phenoxyethyl methacrylate, 2-hydroxyethyl methacrylate, 2-ethoxyethyl methacrylate, glycidyl methacrylate, allyl methacrylate, cyclohexyl methacrylate, norbornenyl methacrylate and isobonyl methacrylate; unsaturated carboxylic acids such as acrylic acid, methacrylic acid, maleic anhydride, maleic acid and itaconic acid; olefins such as ethylene, propylene, 1-butene, isobutylene and 1-octene; conjugated dienes such as butadiene, isoprene and myrcene; aromatic vinyl compounds such as styrene, $\alpha$-methylstyrene, p-methylstyrene and m-methylstyrene; and acrylamide, methacrylamide, acrylonitrile, methacrylonitrile, vinyl acetate, vinyl pyridine, vinyl ketone, vinyl chloride, vinylidene chloride and vinylidene fluoride.

The tacticity of the methacrylic-based resin (F) is not particularly limited, and one having isotactic, heterotactic, syndiotactic or other tacticity may be used for example.

The weight-average molecular weight Mw(F) of the methacrylic-based resin (F) is in the range of preferably 30,000 to 180,000, or more preferably 40,000 to 150,000, or still more preferably 50,000 to 130,000. If the Mw(F) is less than 30,000, the impact resistance and toughness of the resulting base layer tend to be less, while if it exceeds 18,000 the flowability of the methacrylic-based resin (F) tends to decline, detracting from the forming processability.

There are no particular limitations on the method for manufacturing the methacrylic-based resin (F), which may be obtained either by polymerizing monomers (a monomer mixture) of which methyl methacrylate constitutes at least 80 mass%, or by copolymerizing this a monomer other than methyl methacrylate. A commercial product may also be used as the methacrylic-based resin (F). Examples of such commercial products include "Parapet H1000B" (MFR 22g/10 min (230°C, 37.3 N)), "Parapet GF" (MFR 15 g/10 min (230°C, 37.3 N)), "Parapet EH" (MFR 1.3 g/10 min (230°C, 37.3 N)), "Parapet HRL" (MFR 2.0 g/10 min (230°C, 37.3 N)), "Parapet HRS" (MFR 2.4 g/10 min (230°C, 37.3 N)) and "Parapet G" (MFR 8.0 g/10 min (230°C, 37.3 N)) (all of these are name of products manufactured by Kuraray Co., Ltd.).

Examples of the elastic body include butadiene-based rubber, chloroprene-based rubber, block copolymers and multilayer structures, and these may be used independently or combined. Of these, a block copolymer or multilayer structure is preferred from the standpoint of transparency, impact resistance and dispersibility, and the block copolymer (G) or multilayer structure (E) is especially preferred.

The block copolymer (G) has a methacrylic ester polymer block (g1) and an acrylic ester polymer block (g2). The block copolymer (G) may have only one each of the methacrylic ester polymer block (g1) and acrylic ester polymer block (g2), or may have more than one of the same.

The principal constituent unit of the methacrylic ester polymer block (g1) is a structural unit derived from a methacrylic ester. The ratio of the structural unit derived from a methacrylic ester in the methacrylic ester polymer block (g1) is preferably at least 80 mass%, or more preferably at least 90 mass%, or still more preferably at least 95 mass%, or especially preferably at least 98 mass% from the standpoint of extensibility and surface hardness.

Examples of the methacrylic ester include methyl methacrylate, ethyl methacrylate, n-propyl methacrylate, isopropyl methacrylate, n-butyl methacrylate, isobutyl methacrylate, sec-butyl methacrylate, tert-butyl methacrylate, amyl methacrylate, isoamyl methacrylate, n-hexyl methacrylate, cyclohexyl methacrylate, 2-ethylhexyl methacrylate, pentadecyl methacrylate, dodecyl methacrylate, isobornyl methacrylate, phenyl methacrylate, benzyl methacrylate, phenoxyethyl methacrylate, 2-hydroxyethyl methacrylate, 2-methoxyethyl methacrylate, glycidyl methacrylate and allyl methacrylate, and one of these alone or a combination of two or more may be polymerized. Of these, a methacrylic acid alkyl ester such as methyl methacrylate, ethyl methacrylate, isopropyl methacrylate, n-butyl methacrylate, tert-butyl methacrylate, cyclohexyl methacrylate or isobornyl methacrylate is preferred from the standpoint of transparency and heat resistance, and methyl methacrylate is especially preferred.

The methacrylic ester polymer block (g1) may also contain a structural unit derived from a monomer other than a methacrylic ester, and from the standpoint of extensibility and surface hardness, the ratio of this unit is preferably not more than 20 mass%, or more preferably not more than 10 mass%, or still more preferably not more than 5 mass%, or especially preferably not more than 2 mass%.

Examples of the monomer other than a methacrylic ester include acrylic esters, unsaturated carboxylic acids, aromatic vinyl compounds, olefins, conjugated dienes, acrylonitrile, methacrylonitrile, acrylamide, methacrylamide, vinyl acetate, vinyl pyridine, vinyl ketone, vinyl chloride, vinylidene chloride and vinylidene fluoride, and one of these alone or a combination of two or more may be used.

The weight-average molecular weight of the methacrylic ester polymer block (g1) is in the range of preferably 5,000 to 150,000, or more preferably 8,000 to 120,000, or still more preferably 12,000 to 100,000. If the weight-average molecular weight is less than 5,000, elasticity declines, and wrinkles tend to occur during stretch forming at high temperatures, while if it exceeds 150,000, three-dimensional overlaying formability declines, and breakage is more likely during stretch forming.

When the block copolymer (G) has a plurality of methacrylic ester polymer block (g1), the compositional ratios and molecular weights of the structural units making up the respective methacrylic ester polymer blocks (g1) may be either the same or different.

The total weight-average molecular weight Mw(g1-total) of the methacrylic ester polymer block(s) (g1) per molecule of the block copolymer (G) is preferably 12,000 to 150,000, or more preferably 15,000 to 120,000, or still more preferably 20,000 to 100,000. When the block copolymer (G) has only one methacrylic ester polymer block (g1) per molecule, the weight-average molecular weight of the methacrylic ester polymer block (g1) is the same as the Mw(g1-total). When the block copolymer (G) has a plurality of methacrylic ester polymer blocks (g1) per molecule, the Mw(g1-total) is the sum of the weight-average molecular weights of each of the methacrylic ester polymer blocks (g1).

When using a mixture of multiple block copolymers (G) having methacrylic ester polymer blocks (g1) with different weight-average molecular weights, the mixing ratio of each block copolymer (G) is multiplied by the weight average molecular weight of the methacrylic ester polymer block (g1) of each, and the sum is given as the Mw(g1-total).

The ratio of the weight-average molecular weight Mw(F) of the methacrylic-based resin (F) to the Mw(g1-total), that is Mw(F)/Mw(g1-total), is in the range of preferably 0.3 to 4.0, or more preferably 1.0 to 3.5, or still more preferably 1.5 to 3.0. If Mw(F)/Mw(g1-total) is less than 0.3, the impact resistance and surface smoothness of the resulting base layer tend to decline, while if it exceeds 4.0 the surface smoothness of the base layer and the haze temperature dependence tend to be worse.

From the standpoint of transparency, flexibility, forming processability and surface smoothness, the ratio of the methacrylic ester polymer block (g1) in the block copolymer (G) is in the range of preferably 10 to 70 mass%, or more preferably 25 to 60 mass%. When the block copolymer (G) has a plurality of methacrylic ester polymer block (g1), this ratio is calculated based on the total mass of all the methacrylic ester polymer blocks (g1).

The principal constituent unit of the acrylic ester polymer block (g2) is a structural unit derived from an acrylic acid ester. The ratio of the structural unit derived from an acrylic acid ester in the acrylic ester polymer block (g2) is preferably at least 45 mass%, or more preferably at least 50 mass%, or still more preferably at least 60 mass%, or especially preferably at least 90 mass% from the standpoint of three-dimensional overlaying formability and extensibility.

Examples of this acrylic acid ester include methyl acrylate, ethyl acrylate, n-propyl acrylate, isopropyl acrylate, n-butyl acrylate, isobutyl acrylate, sec-butyl acrylate, tert-butyl acrylate, amyl acrylate, isoamyl acrylate, n-hexyl acrylate, cyclohexyl acrylate, 2-ethylhexyl acrylate, pentadecyl acrylate, dodecyl acrylate, isobornyl acrylate, phenyl acrylate, benzyl acrylate, phenoxyethyl acrylate, 2-hydroxyethyl acrylate, 2-methoxyethyl acrylate, glycidyl acrylate and allyl acrylate, and one of these may alone or a combination of two or more may be polymerized.

From the standpoint of extensibility and transparency, the acrylic ester polymer block (g2) preferably consists of an acrylic acid alkyl ester and a (meth)acrylic acid aromatic ester. Examples of the acrylic acid alkyl ester include methyl acrylate, ethyl acrylate, isopropyl acrylate, n-butyl acrylate, 2-ethylhexyl acrylate and dodecyl acrylate. Of these, n-butyl acrylate and 2-ethylhexyl acrylate are preferred.

A (meth)acrylic acid aromatic ester means an acrylic acid aromatic ester or methacrylic acid aromatic ester, and comprises a compound containing an aromatic ring, ester bonded to (meth)acrylic acid. Examples of this (meth)acrylic acid aromatic ester include phenyl acrylate, benzyl acrylate, phenoxyethyl acrylate, styryl acrylate, phenyl methacrylate, benzyl methacrylate, phenoxyethyl methacrylate and styryl methacrylate. Of these, phenyl methacrylate, benzyl methacrylate, phenoxyethyl methacrylate and benzyl acrylate are preferred from the standpoint of transparency.

When the acrylic ester polymer block (g2) consists of a an acrylic acid alkyl ester and a (meth)acrylic acid aromatic ester, from the standpoint of transparency the acrylic ester polymer block (g2) preferably comprises 50 to 90 mass% structural units derived from the acrylic acid alkyl ester and 50 to 10 mass% structural units derived from the (meth)acrylic acid aromatic ester, or more preferably 60 to 80 mass% structural units derived from the acrylic acid alkyl ester and 40 to 20 mass% structural units derived from the (meth)acrylic acid aromatic ester.

The acrylic ester polymer block (g2) may also contain a structural unit derived from a monomer other than an acrylic ester, and in this case the content thereof in the acrylic ester polymer block (g2) is preferably not more than 55 mass%, or more preferably not more than 50 mass%, or still more preferably not more than 40 mass%, or especially preferably not more than 10 mass%.

Examples of the monomer other than an acrylic ester include methacrylic esters, unsaturated carboxylic acids, aromatic vinyl compounds, olefins, conjugated dienes, acrylonitrile, methacrylonitrile, acrylamide, methacrylamide, vinyl acetate, vinyl pyridine, vinyl ketone, vinyl chloride, vinylidene chloride and vinylidene fluoride, and one of these alone or a combination of two or more may be used.

From the standpoint of three-dimensional overlaying formability and extensibility, the weight-average molecular

weight of the acrylic ester polymer block (g2) is in the range of preferably 5,000 to 120,000, or more preferably 15,000 to 110,000, or still more preferably 30,000 to 100,000.

When the block copolymer (G) has a plurality of acrylic ester polymer block (g2), the compositional ratios and molecular weights of the structural units making up the respective acrylic ester polymer blocks (g2) may be either the same or different.

The total weight-average molecular weight Mw(g2-total) of the acrylic ester polymer block(s) (g2) per molecule of the block copolymer is in the range of preferably 30,000 to 140,000, or more preferably 40,000 to 110,000, or still more preferably 50,000 to 100,000. If the Mw(g2-total) is less than 30,000 the resulting base layer tends to have poor impact resistance, while if it exceeds 140,000 the resulting base layer tends to have less surface smoothness. When the block copolymer (G) has only one acrylic ester polymer block (g2) per molecule, the weight-average molecular weight of the acrylic ester polymer block (g2) is the same as the Mw(g2-total). When the block copolymer (G) has a plurality of acrylic ester polymer blocks (g2) per molecule, on the other hand, the Mw(g2-total) is the total of the weight-average molecular weights of each of the acrylic ester polymer blocks (g2).

When using a mixture of multiple block copolymers (G) having acrylic ester polymer blocks (g2) with different weight-average molecular weights, the mixing ratio of each block copolymer (G) is multiplied by the weight average molecular weight of the acrylic ester polymer block (g2) of each, and the sum is given as the Mw(g2-total).

The weight-average molecular weight of the methacrylic ester polymer block (g1) and the weight-average molecular weight of the acrylic ester polymer block (g2) are values calculated from the weight average molecular weight of the intermediate products and the final product (block copolymer (G)) as measured from samples taken during and after polymerization in the process of manufacturing block copolymer (G). Each weight-average molecular weight is a standard polystyrene equivalent value as measured by GPC.

From the standpoint of transparency, flexibility, forming processability and surface smoothness, the ratio of the acrylic ester polymer block (g2) in the block copolymer (G) is in the range of preferably 30 to 90 mass%, or more preferably 40 to 75 mass%. When the block copolymer (G) has a plurality of acrylic ester polymer block (g2), this ratio is calculated based on the total mass of all the acrylic ester polymer blocks (g2).

The form of binding of the methacrylic ester polymer block (g1) and acrylic ester polymer block (g2) in the block copolymer (G) is not particularly limited, and for example the methacrylic ester polymer block (g1) and acrylic ester polymer block (g2) may be connected serially, with one end of the acrylic ester polymer block (g2) connected to one end of the methacrylic ester polymer block (g1) ((g1)-(g2) structure); or with one end of the acrylic ester polymer block (g2) connected to both ends of the methacrylic ester polymer block (g1) ((g2)-(g1)-(g2) structure); or with one end of the methacrylic ester polymer block (g1) connected to both ends of the acrylic ester polymer block (b2) ((g1)-(g2)-(g1) structure). Other possibilities include star block copolymers, such as radial structures including multiple block copolymers with (g1)-(g2) structures attached at one end ([(g1)-(g2)-]nX and [(g2)-(g1)-]nX structures), and radial structures including multiple block copolymers with (g1)-(g2)-(g1) structures attached at one end ([(g1)-(g2)-(g1)-]nX structure) or multiple block copolymers with (g2)-(g1)-(g2) structures attached at one end ([(g2)-(g1)-(g2)-]nX structure), as well as block copolymers with branched structures. X here represents a coupling agent residue. Of these, diblock copolymers, triblock copolymers and star block copolymers are preferred from the standpoint of surface smoothness and impact resistance, (g1)-(g2) diblock copolymers, (g1)-(g2)-(g1) triblock copolymers, [(g1)-(g2)-]nX star block copolymers and [(g1)-(g2)-(g1)-]nX star block copolymers are especially preferred, and (g1)-(g2)-(g1) triblock copolymers are especially still more preferred.

The block copolymer (G) may also have another polymer block (g3) other than the methacrylic ester polymer block (g1) and acrylic ester polymer block (g2). The principal structural unit constituting the polymer block (g3) is a structural unit derived from a monomer that is not a methacrylic ester or acrylic ester, and examples of this monomer include olefins such as ethylene, propylene, 1-butene, isobutylene and 1-octene; conjugated dienes such as butadiene, isoprene and myrcene; aromatic vinyl compounds such as styrene, $\alpha$-methylstyrene, p-methylstyrene and m-methylstyrene; and vinyl acetate, vinyl pyridine, acrylonitrile, methacrylonitrile, vinyl ketone, vinyl chloride, vinylidene chloride, vinylidene fluoride, acrylamide, methacrylamide, $\varepsilon$-caprolactone and valerolactone.

When the block copolymer (G) has the polymer block (g3), the form of binding of the methacrylic ester polymer block (g1), acrylic ester polymer block (g2) and polymer block (g3) is not particularly limited, and may be for example a (g1)-(g2)-(g1)-(g3) or (g3)-(g1)-(g2)-(g1)-(g3) block copolymer structure. When the block copolymer (G) has a plurality of polymer block (g3), the compositional ratios and molecular weights of the structural units making up the respective polymer blocks (g3) may be either the same or different.

The block copolymer (G) may also have a functional group such as a hydroxyl group, carboxyl group, acid anhydride, amino group either in the molecular chain or at the end of the molecular chain.

The weight-average molecular weight Mw(G) of the block copolymer (G) is in the range of preferably 60,000 to 400,000, or more preferably 100,000 to 200,000. If the weight-average molecular weight of the block copolymer (G) is less than 60,000, a good flat molded body is difficult to obtain because adequate melt tension cannot be maintained during melt extrusion molding, and the breaking strength and other mechanical properties of the resulting flat molded

body tend to be less, while if it exceeds 400,000 the viscosity of the molten resin increases, and fine textural irregularities and seeding caused by unmelted material (high-molecular-weight material) tend to occur on the surface of a flat molded body obtained by melt extrusion molding, making a good flat molded body difficult to obtain.

The molecular weight distribution of the block copolymer (G) is in the range of preferably 1.0 to 2.0, or more preferably 1.0 to 1.6. If the molecular weight distribution is within this range, the content of unmelted material that causes seeding in the base layer can be reduced. The weight-average molecular weight and number-average molecular weight are the standard polystyrene equivalent weights as measured by GPC.

The refractive index of the block copolymer (G) is in the range of preferably 1.485 to 1.495, or more preferably 1.487 to 1.493. If the refractive index is within this range, the resulting base layer is highly transparent. The refractive index is a value measured at a wavelength of 587.6 nm (d line).

The method for manufacturing the block copolymer (G) is not particularly limited, and may be consistent with known techniques, and for example methods involving living polymerization of the monomers constituting the individual polymer blocks are commonly used. Such living polymerization techniques include for example a method of anionic polymerization in the presence of an alkali metal or a mineral acid salt such as an alkali earth metal salt, using an organic alkali metal compound as a polymerization initiator; a method of anionic polymerization in the presence of an organic aluminum compound, using an organic alkali metal compound as a polymerization initiator; a method of polymerization using an organic rare earth metal complex as a polymerization initiator; and a method of radical polymerization in presence of a copper compound using an $\alpha$-halogenated ester compound as an initiator. Another method is to manufacture a mixture containing the block copolymer (G) by polymerizing the monomers constituting the various blocks using a polyvalent radical polymerization initiator or polyvalent radical chain transfer agent. Of these methods, the method of anionic polymerization in the presence of an organic aluminum compound using an organic alkali metal compound as a polymerization initiator is preferred because it yields a highly pure block copolymer (G), allows easy control of the molecular weight and compositional ratio, and is also economical.

The multilayer structure (E) contains at least 2 layers, an inner layer (e2) and an outer layer (e1), and has at least one layered structure in which the inner layer (e2) and outer layer (e1) are disposed in this order from the middle layer in the direction of the outermost layer. The multilayer structure (E) may also have a crosslinkable resin layer (e3) on the inside of the inner layer (e2) or the outside of the outer layer (e1).

The inner layer (e2) is a layer comprised of a crosslinked elastic body obtained by copolymerizing a monomer mixture having an acrylic acid alkyl ester and a crosslinkable monomer.

An acrylic acid alkyl ester with 2 to 8 carbon atoms in the alkyl group is preferred as the acrylic acid alkyl ester, and examples include butyl acrylate and 2-ethylhexyl acrylate. From the standpoint of impact resistance, the ratio of the acrylic acid alkyl ester as a percentage of the total monomer mixture used to form the copolymer of the inner layer (e2) is in the range of preferably 70 to 99.8 mass%, or more preferably 80 to 90 mass%.

The crosslinkable monomer used in the inner layer (e2) may be any having at least two polymerizable carbon-carbon double bonds per molecule, and examples include unsaturated carboxylic acid diesters of glycols, such as ethylene glycol dimethacrylate and butanediol dimethacrylate, alkenyl esters of unsaturated carboxylic acids, such as allyl acrylate, allyl methacrylate and allyl cinnamate, polyalkenyl esters of polybasic acids, such as diallyl phthalate, diallyl maleate, triallyl cyanurate and triallyl isocyanurate, unsaturated carboxylic acid esters of polyhydric alcohols, such as trimethylol propane triacrylate, and divinyl benzene. An alkenyl ester of an unsaturated carboxylic acid or a polyalkenyl ester of a polybasic acid is preferred. In order to improve the impact resistance, heat resistance and surface hardness of the base layer, the amount of the crosslinkable monomer as a percentage of the total monomer mixture is in the range of preferably 0.2 to 30 mass%, or more preferably 0.2 to 10 mass%.

The monomer mixture forming the inner layer (e2) may also comprise another monofunctional monomer. Examples of this monofunctional monomer include alkyl methacrylates such as methyl methacrylate, ethyl methacrylate, n-propyl methacrylate, isopropyl methacrylate, n-butyl methacrylate, isobutyl methacrylate, pentyl methacrylate, hexyl methacrylate, octyl methacrylate, 2-ethylhexyl methacrylate, cyclohexyl methacrylate, dodecyl methacrylate, myristyl methacrylate, palmityl methacrylate, stearyl methacrylate and behenyl methacrylate; methacrylic acid esters, including esters of methacrylic acid and phenols such as phenyl methacrylate and esters of methacrylic acid and aromatic alcohols such as benzyl methacrylate; aromatic vinyl-based monomers such as styrene, $\alpha$-methylstyrene, 1-vinyl naphthalene, 3-methylstyrene, 4-propylstyrene, 4-cyclohexylstyrene, 4-dodecylstyrene, 2-ethyl-4-benzylstyrene, 4-(phenylbutyl)styrene and halogenated styrenes; vinyl cyanide-based monomers such as acrylonitrile and methacrylonitrile; and conjugated diene-based monomers such as butadiene and isoprene. To improve the impact resistance of the base layer, the amount of the other monofunctional monomer as a percentage of the total monomer mixture is preferably not more than 24.5 mass%, or more preferably not more than 20 mass%.

Considering the impact resistance of the base layer, the outer layer (e1) is composed of a hard thermoplastic resin obtained by polymerizing a monomer mixture containing at least 80% or preferably at least 90 mass% methyl methacrylate. The hard thermoplastic resin may also contain not more than 20 mass%, or preferably not more than 10 mass% of another monofunctional monomer.

Examples of the other monofunctional monomer include acrylic acid alkyl esters such as methyl acrylate, butyl acrylate and 2-ethylhexyl acrylate; acrylic acid; and methacrylic acid.

Regarding the content ratios of the inner layer (e2) and outer layer (e1) in the multilayer structure (E), the content ratio of the inner layer (e2) is preferably selected from the range of 40 to 80 mass% and the content ratio of the outer layer (e1) is preferably selected from the range of 20 to 60 mass% based on the mass of the multilayer structure (E) (for example, the total of the inner layer (e2) and outer layer (e1) when this consists of two layers) considering the impact resistance, heat resistance, surface hardness and handling properties of the base layer and the ease of melt kneading with the methacrylic-based resin (F) and the like.

The method for manufacturing the multilayer structure (E) is not particularly limited, but preferably it is manufactured by emulsion polymerization in order to control the layer structure of the multilayer structure (E).

The amorphous resin may also contain various additives such as an antioxidant, heat stabilizer, lubricant, processing aid, antistatic agent, colorant or impact resistance aid.

The antioxidant by itself has the effect of preventing oxidative deterioration of the resin in the presence of oxygen, and examples include phosphorus-based antioxidants, hindered phenol-based antioxidants and thioether-based antioxidants. One of these antioxidants alone or a mixture of two or more may be used. To reduce the loss of optical characteristics due to discoloration, a phosphorus antioxidant or hindered phenol antioxidant is preferred, and a combination of a phosphorus antioxidant and a hindered phenol antioxidant is more preferred. When a phosphorus-based antioxidant and a hindered phenol-based antioxidant are used together, the ratio thereof is not particularly limited, but preferably the ratio of phosphorus-based antioxidant/hindered phenol-based antioxidant is in the range of 1/5 to 2/1 or more preferably 1/2 to 1/1.

Examples of phosphorus-based antioxidants include 2,2-methylenebis(4,6-di-tert-butylphenyl)octyl phosphate (Asahi Denka Co., Ltd.; ADK STAB HB-10), and tris(2,4-di-tert-butylphenyl)phosphate (Ciba Specialty Chemicals, Inc.; Irgafos 168).

Examples of hindered phenol-based antioxidants include pentaerythrityl-tetrakis[3-(3,5-di-tert-butyl-4-hydroxyphenyl)propionate] (Ciba Specialty Chemicals, Inc.; Irganox 1010), octadecyl-3-(3,5-di-tert-butyl-4-hydroxyphenyl)propionate (Ciba Specialty Chemicals, Inc.; Irganox 1076), and 3,9-bis(2,6-di-tert-butyl-4-methylphenoxy)-2,4,8,10-tetraoxa-3,9-diphophaspyro[5.5]undecane (Adeka Corporation; ADK STAB PEP-36).

An anti-thermal degradation agent is a compound that can reduce thermal degradation of the resin by capturing polymer radicals produced when the amorphous resin reaches high temperaturesin an effectively oxygen-free condition, and examples include 2-tert-butyl-6-(3'-tert-butyl-5'-methyl-hydroxybenzyl)-4-methylphenyl acrylate (Sumitomo Chemical Co., Ltd.; Sumilizer GM), and 2,4-di-tert-amyl-6-(3',5'-di-tert-amyl-2'-hydroxy-a-methylbenzyl)phenyl acrylate (Sumitomo Chemical Co., Ltd.; Sumilizer GS).

A UV absorber is a compound having the ability to absorb UV rays, and examples include benzophenones, benzotriazoles, triazines, benzoates, salicylates, cyanoacrylates, oxalic acid anilides, malonic acid esters and formamidines. One of these alone or a combination of two or more may be used. Of these, benzotriazoles or anilides is preferred for controlling bleed-out.

Examples of benzotriazoles include 2,2'-methylenebis[4-(1,1,3,3-tetramethylbutyl)-6-(2H-benzotriazole-yl)phenol] (Asahi Denka Co., Ltd.; ADK STAB LA-31), 2-(2H-benzotriazole-2-yl)-4-(1,1,3,3-tetramethylbutyl)phenol (Ciba Specialty Chemicals, Inc.; Tinuvin 329), and 2-(2H-benzotriazole-2-yl)-4,6-bis(1-methyl-1-phenylethyl)phenol (Ciba Specialty Chemicals, Inc.; Tinuvin 234). Examples of anilides include 2-ethyl-2'-ethoxy-oxalanilide (Clariant Japan K.K.; Sanduvor VSU). Of these, benzotriazoles is preferred because it has a strong suppression effect on resin deterioration caused by UV rays.

A light stabilizer is compound that is primarily believed to have the function of capturing radicals generated by oxidation caused by light, and examples include hindered amines, such as compounds having a 2,2,6,6-tetralkylpiperidine framework.

A polymer processing aid is a compound that is effective for improving the thickness accuracy and forming a thin film when molding the amorphous resin, and is normally a polymer particle with a particle diameter of 0.05 to 0.5 $\mu$m manufactured by emulsion polymerization. This polymer particle may be a single-layer particle consisting of a polymer with a single compositional ratio and a single intrinsic viscosity, or it may be a multilayer particle consisting of two or more polymers with different compositional ratios and intrinsic viscosities. Of these, a particle with a 2-layer structure including a polymer layer with a low intrinsic viscosity as the inner layer and a polymer layer with an intrinsic viscosity of at least 5 dl/g as the outer layer is preferred. The polymer processing aid preferably has an intrinsic viscosity in the range of 3 to 6 dl/g. If the intrinsic viscosity is less than 3 dl/g the improvement effect on formability is less, while if it exceeds 6 dl/g the melt flowability of the amorphous resin tends to be low.

The amorphous resin may also be used in a mixture with another polymer. Examples of this other polymer include polyolefin resins such as polyethylene, polypropylene (PP), polybutene-1, poly-4-methylpentene-1 and polynorbornene; ethyle-based ionomers; styrene-based resins such as polystyrene, styrene-maleic anhydride copolymer, high impact polystyrene, acrylonitrile-styrene copolymer, acrylonitrile-butadiene-styrene copolymer (ABS), acrylonitrileethylene-styrene copolymer, acrylonitrile-acrylic ester-styrene copolymer, acrylonitrilechlorinated polyethylene-styrene copolymer and methyl methacrylate-butadiene-styrene copolymer; methyl methacrylate-styrene copolymer; polyester resins such as polyethylene terephthalate (PET) and polybutylene terephthalate; polyamides such as nylon 6, nylon 66 and polyamide elastomer; polycarbonate, polyvinyl chloride, polyvinylidene chloride, polyvinyl alcohol, ethylene-vinyl alcohol copolymer, polyacetal, vinylidene polyfluoride, polyurethane, modified polyphenylene ether, polyphenylene sulfide and silicone modified resin; acrylic rubber and silicone rubber; styrene-based thermoplastic elastomers such as styrene-ethylene/propylenestyrene copolymer, styrene-ethylene/butadiene-styrene copolymer and styrene-isoprene-styrene copolymer; and olefin-based rubbers such as isoprene rubber, ethylene propylene rubber and ethylene propylene diene rubber.

The method for preparing the amorphous resin is not particularly limited, but a method melt kneading and mixing is preferred in order to increase the dispersibility of the various components making up the amorphous resin. For example, a known mixing or kneading apparatus such as a kneader rudder, extruder, mixing roll or Bunbury mixer may be used for the mixing operation, and a twin-screw extruder is preferred for improving kneadability and compatibility. The temperature during mixing and kneading can be adjusted appropriately according to the melting temperature of the amorphous resin and the like, and is normally in the range of 110°C to 300°C. When a twin-screw extruder is used, the melt kneading is preferably performed using a vent at reduced pressure and/or in a nitrogen atmosphere in order to suppress discoloration. It is thus possible to obtain an amorphous resin in any form, such as pellet or powder form. An amorphous resin in pellet or powder form is suitable as a molding material.

The base layer may be manufactured by a known method such as the T-die method, inflation method, melt casting method or calendar method. To obtain a base layer with good surface smoothness and low haze, the method preferably includes a step in which the melt kneaded product is extruded from a T-die in a molten state and then molded through contact with mirror roll surfaces or mirror belt surfaces on both sides, or more preferably a step of molding by pinching under pressure between mirror roll surfaces or mirror belt surfaces on both sides. The rolls or belts used here are preferably all made of metal. The pinching pressure of the mirror rolls or mirror belts is preferably a linear pressure of at least 10 N/mm, or more preferably at least 30 N/mm from the standpoint of surface smoothness.

When the base layer is manufactured by the T-die method, for example an extrudertype melt extrusion apparatus having a single or twin extrusion screw may be used. The molding temperature for manufacturing the base layer is in the range of preferably 200°C to 300°C, or more preferably 220°C to 270°C from the standpoint of forming processability and product quality. When using a melt extrusion apparatus, it is desirable to perform melt extrusion under reduced pressure or in a nitrogen atmosphere using a vent in order to suppress discoloration.

In the step of molding the amorphous resin in a molten state by pinching it under pressure between mirror roll surfaces or mirror belt surface on both sides, the surface temperature of at least one of the mirror rolls or mirror belts on either side of the amorphous resin is preferably at least 60°C, and the surface temperatures on both sides are preferably not more than 130°C. If the surface temperatures of both mirror rolls or mirror belts on either side of the amorphous resin are less than 60°C, the base layer tends to have less surface smoothness and haze, while if the surface temperature of at least one side exceeds 130°C, the surface smoothness of the resulting base layer tends to be less or the haze tends to be greater.

The base layer may also be colored. The coloring method is not particularly limited, and may be a method of including a pigment or dye in the amorphous resin itself, or a method of immersing the base layer in a liquid containing a dispersed dye.

The roughness of the base layer is preferably not more than 1.5 nm, or more preferably in the range of 0.1 to 1.0 nm. Within this range, the multilayer film of the present invention has excellent surface smoothness, surface gloss and printing clarity. It also has excellent light transmittance and other optical characteristics for optical applications and excellent shaping accuracy for surface shaping.

At a thickness of 75 $\mu$m, the haze of the surface layer is preferably not more than 0.3%, or more preferably not more than 0.2%. This is desirable because it provides for excellent printing clarity in applications requiring design features, and also serves to increase the utilization efficiency of the light source in the case of optical applications such as light guide films and protective films for liquid crystal displays.

The thickness of the base layer is in the range of 10 to 500 $\mu$m, or preferably 40 to 300 $\mu$m, or more preferably 50 to 200 $\mu$m. If the base layer is less than 10 $\mu$m thick the multilayer film is less strong and more likely to warp during stretch forming and adhesion, while above a thickness of 500 $\mu$m the laminating properties, handling properties, cutting properties, punching workability and the like are weakened, and this makes the film unsuitable as the film becomes more difficult to use as a film and more likely to break during vacuum molding.

The base layer may be one that has undergone a stretching process. The stretching process can increase the mechanical strength and produce a base layer that is resistant to cracking. The stretching method is not particularly limited, and may be simultaneous biaxial stretching, sequential biaxial stretching, tubular stretching or rolling for example. In order to achieve uniform stretching and obtain a strong base layer, the temperature during stretching is preferably (Tg + 10)°C to (Tg + 40)°C, given the glass transition temperature (Tg) of the amorphous resin. If the stretching temperature

is less than (Tg + 10)°C the molded body is likely to break during stretching, while if it exceeds (Tg + 40)°C the effects of the stretching process may not be sufficient and the base layer may be more unlikely strengthened. The stretching speed is normally 100% to 5,000% per minute. If the stretching speed is slow the strength may not be sufficiently improved, and productivity also declines. If the stretching speed is too fast the base layer may break, and uniform stretching becomes difficult. Thermal setting is preferably performed after stretching. A base layer with little heat shrinkage can be obtained through thermal setting. The thickness of the base layer obtained by stretching is preferably in the range of 10 to 500 μm. The glass transition temperature (Tg) of the amorphous resin is determined by differential scanning calorimetry (DSC).

The multilayer film of the present invention comprises a base layer and an adhesive layer. The method of laminating the adhesive layer may be a method of coating the base layer with a solution of a thermoplastic polymer composition; a method of laminating a film made of the thermoplastic polymer composition onto the base layer; or a method of co-extruding the amorphous resin and the thermoplastic polymer composition from a T-die. The film made of the thermoplastic resin composition is obtained in the same way as the base layer. From the standpoint of economy and productivity, a co-extrusion molding method using a multi-manifold die is particularly desirable.

The elongation at break of the multilayer film of the present invention as measured at a temperature 5°C lower than the glass transition temperature (Tg) of the amorphous resin is at least 160%, or preferably at least 200%, or more preferably at least 250%. If the elongation at break is less than 160% the multilayer film cannot be accurately shaped, and the three-dimensional overlaying formability tends to be less, resulting in breakage and wrinkles.

The base layer and/or adhesive layer of the multilayer film of the present invention may also be printed with pictures, words, graphics or other patterns or colors. The patterns may be either colored or uncolored. Methods of printing include known printing methods such as gravure printing, offset printing, screening printing, transfer printing and inkjet printing. The printing process preferably uses a resin composition commonly used in such printing methods that contains a pigment or dye as a colorant and a resin such as a polyvinyl resin, polyester resin, acrylic-based resin, polyvinyl acetal resin or cellulose resin as a binder.

A metal or metal oxide may also be deposited on the base layer in the multilayer film of the present invention. A metal or metal oxide used in sputtering, vacuum deposition or the like may be used as this metal or metal oxide, without any particular limitations, and examples include gold, silver, copper, aluminum, zinc, nickel, chromium, indium and oxides of these. These metals or metal oxides may be used alone, or a mixture of two or more may be used. Methods of depositing the metal or metal oxide on the base layer include vacuum film-forming methods such as vapor deposition and sputtering, and electroplating, electroless plating and the like.

The base layer side of the multilayer film preferably has a pencil hardness of HB hardness or higher, and more preferably H hardness or higher. If the pencil hardness is higher than HB the multilayer film is hard to scratch, making it suitable as a protective film.

The thickness of the multilayer film is in the range of preferably 20 to 1,000 μm, or more preferably 50 to 500 μm, or still more preferably 100 to 250 μm. If the thickness of the multilayer film is at least 20 μm the multilayer film is easy to manufacture, has excellent impact resistance and warpage reduction during heating, and also has shielding properties during coloration. If the film thickness is not more than 1,000 μm, the three-dimensional overlaying formability tends to be good.

The ratio of the thickness of the base layer to the thickness of the adhesive layer is in the range of preferably 0.2 to 5, or more preferably 0.5 to 4, or still more preferably 0.8 to 3. If the ratio of the thickness of the base layer to the thickness of the adhesive layer is less than 0.2 the surface hardness tends to be low, and if it exceeds 5 the multilayer film tends to break more easily, while if it exceeds 4 the stretchability tends to be lower, and if it exceeds 3 the stretchability tends to be still lower.

The molded body of the present invention comprises the multilayer film of the present invention on the surface of an adherend, and has excellent surface smoothness, surface hardness and surface gloss. The adherend may be another thermoplastic resin, a thermosetting resin, a wooden material or a non-wood fiber substrate for example.

Examples of other thermoplastic resins used as adherends include polycarbonate resin, PET resin, polyamide resin, polyethylene resin, polypropylene resin, polystyrene resin, polyvinyl chloride resin, (meth)acrylic resin and ABS resin. Examples of thermosetting resins include epoxy resin, phenol resin and melamine resin. Examples of non-wood fiber substrates include kenaf substrates.

The method for manufacturing the molded body is not particularly limited, and may be an insert forming method, vacuum forming method, air-pressure forming method, compression forming method, three-dimension overlay method (TOM forming) or the like, but a vacuum forming method or TOM forming is preferred to allow accurate forming and adhesion on a variety of adherends, and TOM forming is especially preferred.

A method of manufacturing a molded body by TOM forming is given as an example of a preferred embodiment. For example, the vacuum forming apparatus described in Japanese Unexamined Patent Application Publication No. 2002-067137 or the coating apparatus described in Japanese Unexamined Patent Application Publication No. 2005-262502 may be used as the vacuum forming apparatus for TOM forming the multilayer film, and this vacuum

forming apparatus or coating apparatus is equipped with a chamber box that can be sealed and depressurized with the multilayer film and adherend inside.

The method for manufacturing the molded body by TOM forming comprises a step of enclosing the multilayer film and adherend in the chamber box; a step of reducing the pressure inside the chamber box; a step of bisecting the interior of the chamber box with the multilayer film; and a step of increasing the pressure in the chamber box not having the adherend higher than the pressure in the chamber box having the adherend, to thereby overlay the adherend with the multilayer film. The step of bisecting the interior of the chamber box with the multilayer film may be performed simultaneously with the step of enclosing the multilayer film and adherend in the chamber box.

In the step of reducing the pressure inside the chamber box, the pressure inside the chamber box is preferably in the range of 0.1 to 20 kPa, or more preferably 0.1 to 10 kPa. If the pressure is higher than 20 kPa it becomes difficult to accurately form the multilayer film in the step of overlaying the adherend with the multilayer film, while if it is less than 0.1 kPa productivity tends to decrease because the forming process takes more time.

The method for manufacturing the molded body by TOM forming preferably comprises a step of heating and softening the multilayer film. In this step, the multilayer film is preferably heated to a temperature range of 110°C to 160°C, or more preferably 110°C to 140°C. If the temperature of the multilayer film is less than 110°C, the multilayer film does not soften properly, resulting in forming defects, and the adhesive force of the multilayer film in the molded body tends to be less. If it exceeds 160°C, on the other hand, over-softening and deterioration of the multilayer film may occur, detracting from the quality of the molded body. The step of reducing the pressure inside the chamber box and the step of heating and softening the multilayer film may be performed simultaneously.

In the step of increasing the pressure in the chamber box not having the adherend higher than the pressure in the chamber box having the adherend, the pressure in the chamber box not having the adherend is preferably in the range of 50 to 500 kPa, or more preferably 100 to 400 kPa. If the pressure in the chamber box not having the adherend is less than 50 kPa, it becomes difficult to accurately form the multilayer film in the step of overlaying the adherend with the multilayer film. If the pressure in the chamber box not having the adherend exceeds 500 kPa, productivity tends to decline because it takes time to restore atmospheric pressure (about 100 kPa) when removing the molded body from the chamber box.

The method for increasing the pressure in the chamber box not having the adherend higher than the pressure in the chamber box having the adherend may be for example a method of exposing the chamber box not having the adherend to atmospheric pressure, or supplying pressurized air to the side of the chamber box not having the adherend. By supplying pressurized air, it is possible to more tightly mold the multilayer film on the adherend, and transfer the shape of the adherend more accurately to the multilayer film.

The good three-dimensional overlaying formability, surface hardness, extensibility, forming processability, adhesiveness and shielding properties of the multilayer film of the present invention make it suited to articles that require design features. Examples include sign components such as billboards, signboards, projecting signs, transom signs and rooftop signs; display components such as show cases, partitions and shop displays; lighting components such as fluorescent light covers, mood lighting covers, lampshades, lighted ceilings, lighted walls and chandeliers; interior components such as furniture, pendants and mirrors; construction components such as doors, domes, safety window glass, room partitions, staircase panels, balcony panels and roofs of leisure structures; automobile exterior materials and other transportrelated components, such as automobile interior and exterior parts and bumpers; electronic device components such as audiovisual nameplates, stereo covers, vending machines, portable phones and personal computers; incubators, rulers, communication boards, greenhouses, water tanks, aquariums, bathroom materials, clock panels, bathtubs, sanitary materials, desk mats, game equipment, toys, musical instruments and wallpaper; and other decorative applications such as masking films and various household electronics. In this way, the multilayer film of the present invention can be suitably used.

## Examples

The present invention is explained in more detail below using examples, but the present invention is not limited to these examples. The physical properties in the examples and comparative examples were evaluated by the following methods.

[Elastic modulus]

Pellets of the amorphous resin were press molded into a film (length 30 mm × width 5 mm × thickness 45 μm), and the storage elastic modulus was measured at a temperature of 110°C to 160°C and a frequency of 1 Hz in temperature dependency mode with a kinetic viscosity measurement device (Rheology Co., Ltd.; DVE-V4FT Rheospectra).

[Elongation at break]

A value for elongation at break of the multilayer film was obtained by the method conforming to JIS K 7161 at a temperature 5°C lower than the glass transition temperature (Tg) of the amorphous resin, using a tensile tester (Instron; 5566 Universal Testing Machine).

[Surface hardness]

The surface hardness on the base layer side of the multilayer film was measured under conditions of pitch 2 mm, load 10 N in accordance with JIS K 5600-5-4 using a pencil hardness tester (Toyo Seiki Seisaku-sho, Ltd.; manual pencil hardness tester).

[Shielding]

The multilayer film was held up to a fluorescent light, and light permeability was evaluated visually.

A+: Almost no light permeation
A: Little light permeation
B: Complete light permeation

[Three-dimensional overlaying formability]

A multilayer film (length 210 mm × width 297 mm) and a concave metal mold (length 250 mm × width 160 mm × depth 25 mm) were inserted into a vacuum pressure forming machine (Fu-se Vacuum Forming Ltd.; NGF 0406 forming machine) with the adhesive layer facing the mold, the multilayer film was heated to 110°C, a three-dimensional overlay method (TOM forming) similar to the method described below with respect to Example 1 was implemented to form the elongated multilayer film into a box shape, and the formability of the multilayer film was evaluated visually. The forming temperature was also raised to 160°C in 10°C increments, and multilayer films were formed and formability evaluated by the same methods.

A: Accurate forming with no breakage of the multilayer films formed at any of the temperatures from 110°C to 160°C
B: Breaking or wrinkling of some of the multilayer films formed at temperatures from 110°C to 160°C

[Adhesive strength]

The multilayer film was heated to 130°C, the base layer side of a molded body prepared by the method described below was fixed with strong adhesive tape (Nitto Denko Corporation; Hyperjoint H9004) to a stainless steel (SUS) plate, and the peeling strength between the base layer and the adherend was measured under conditions of peeling angle 180°, tension rate 300 mm/min, environmental temperature 23°C in accordance with JIS K 6854-2 using a tabletop precision universal tester (Shimadzu Corporation; AGS-X), and the adhesive strength of the multilayer film in the molded body was evaluated.

(Synthesis Example 1) [Thermoplastic elastomer (A-1)]

64 L of cyclohexane as a solvent, 0.20 L of sec-butyl lithium (10 mass% cyclohexane solution) as an initiator and 0.3 L of tetrahydrofuran as an organic Lewis base were loaded into a nitrogen-purged and dried pressure-resistant container. The temperature was raised to 50°C, 2.3 L of styrene were added and the mixture was polymerized for 3 hours, after which 23 L of isoprene were added and the mixture was polymerized for 4 hours, after which a further 2.3 L of styrene were added and the mixture was polymerized for 3 hours. The resulting reaction solution was poured into 80 L of methanol, and the precipitated solid was filtered out and dried for 20 hours at 50°C to obtain a triblock copolymer including polystyrene-polyisoprene-polystyrene. Next, 10 kg of the polystyrene-polyisoprene-polystyrene triblock copolymer were dissolved in 200 L of cyclohexane, palladium carbon (palladium carrier: 5 mass%) was added as a hydrogenation catalyst in the amount of 5 mass% of the copolymer, and the mixture was reacted for 10 hours at 150°C, hydrogen pressure 2 MPa. This was left to cool and depressurize, the palladium carbon was removed by filtration, and the filtrate was concentrated and then vacuum dried to obtain a hydrogenate of a triblock copolymer including polystyrene-polyisoprene-polystyrene (hereunder called "thermoplastic elastomer (A-1)"). The resulting thermoplastic elastomer (A-1) had a weight-average molecular weight of 107,000, a styrene content of 21 mass%, a hydrogenation rate of 85%, a molecular weight distribution of 1.04, and a total ratio of 60 mol% of 1,2 binding and 3,4 binding in the polyisoprene blocks.

(Synthesis example 2) [Polyvinyl acetal resin (B-1)]

75 kg of n-butylaldehyde and 110 kg of 35% to 37% hydrochloric acid were added to an aqueous solution of 100 kg of polyvinyl alcohol resin with an average degree of polymerization of 500 and a degree of saponification of 99 mol%, and stirred to perform acetalization, and the resin was precipitated. This was washed by known methods until the pH was 6, suspended in a sodium hydroxide aqueous solution and stirred as post-treatment was performed, washed until the pH was 7 and dried until the volatile component was 0.3% to obtain a polyvinyl acetal resin (B-1) with a degree of acetalization of 80 mol%.

(Synthesis example 3) [Polar group-containing polypropylene-based resin (B-2)]

42 kg of polypropylene (Prime Polymer Co., Ltd.; Prime Polyprop F327), 160 g of maleic anhydride and 42 g of 2,5-dimethyl-2,5-di(tert-butylperoxy)hexane were melt kneaded with a batch mixer at 180°C at a screw rotation rate of 40 rpm to obtain a polar group-containing polypropylene-based resin (B-2). The polar group-containing polypropylene -based resin (B-2) had an MFR of 6 g/10 min at 230°C, load 2.16 kg (21.18 N), a maleic anhydride concentration of 0.3%, and a melting point of 138°C. The maleic anhydride concentration is a value obtained by titration using a methanol solution of potassium hydroxide. The melting point is a value determined from the endothermic peak of the differential scanning calorimetry curve as measured at a ramp rate of 10°C/min.

(Synthesis Example 4) [Methacrylic-based resin (F-1)]

0.1 mass parts of a polymerization initiator (2,2'-azobis(2-methylpropyonitrile), hydrogen abstraction ability 1%, 1-hour half life temperature 83°C) and 0.28 mass parts of a chain transfer agent (n-octyl mercaptan) were added to a monomer mixture consisting of 95 mass parts of methyl methacrylate and 5 mass parts of methyl acrylate, and dissolved to obtain a raw material solution. Meanwhile, 100 mass parts of ion-exchange water, 0.03 mass parts of sodium sulfate and 0.45 mass parts of a suspending dispersant were mixed in a separate container to obtain a mixed solution. 420 mass parts of the mixed solution and 210 mass parts of the raw material solution were loaded into a pressure-resistant polymerization tank, and stirred in a nitrogen atmosphere as the temperature was raised to 70°C to initiate a polymerization reaction. 3 hours after the start of the polymerization reaction the temperature was raised to 90°C, and stirring was continued for 1 hour to obtain a solution of a dispersed copolymer in bead form. The resulting copolymer dispersion was washed with a suitable amount of ion-exchange water, and the copolymer beads were extracted with a bucket-type centrifuge and dried for 12 hours in an 80°C hot air drier to obtain a methacrylic-based resin (F-1) in bead form with a weight-average molecular weight Mw(F) of 30,000 and a Tg of 128°C.

(Synthesis Example 5) [Block copolymer (G-1)]

735 kg of dry toluene, 39.4 kg of a toluene solution containing 0.4 kg of hexamethyltriethylenetetramine and 20 mol of isobutylbis(2,6-di-tert-butyl-4-methylphenoxy)aluminum, 1.17 mol of sec-butyl lithium and 35.0 kg of methyl methacrylate were added in that order at room temperature to a reaction vessel the interior of which had been deaerated and nitrogen purged, and reacted for 1 hour at room temperature. Part of the reaction solution was sampled, and the polymer contained in the reaction solution was found to have a weight-average molecular weight of 40,000, corresponding to the weight-average molecular weight Mw(g1-1) of the methyl methacrylate polymer block (g1-1).

This reaction solution was then cooled to -25°C, and a mixture of 24.5 kg of n-butyl acrylate and 10.5 kg of benzyl acrylate was added dropwise over the course of 0.5 hours. Part of the reaction solution was sampled, and the polymer contained therein was found to have a weight-average molecular weight of 80,000. Since the weight-average molecular weight Mw(g1-1) of the methyl methacrylate polymer block (g1-1) was 40,000, the weight-average molecular weight Mw(g2) of the acrylic ester polymer block (g2) consisting of a copolymer of n-butyl acrylate and benzyl acrylate was determined to be 40,000.

35.0 kg of methyl methacrylate were then added, and the reaction solution was returned to room temperature and stirred for 8 hours to form a second methacrylic ester polymer block (g1-2). 4 kg of methanol were then added to the reaction solution to stop polymerization, after which the reaction solution was poured into a large quantity of methanol, and the filtrate was dried for 12 hours at 80°C, 1 torr (about 133 Pa) to isolate a block copolymer (G-1). Since the weight-average molecular weight Mw(G) of the resulting block copolymer (G-1) was 120,000, the weight-average molecular weight Mw(g1-2) of the methyl methacrylate polymer block (g1-2) was determined to be 40,000. Since the weight-average molecular weight Mw(g1-1) of the methyl methacrylate polymer block (g1-1) and the weight-average molecular weight Mw(g1-2) of the methyl methacrylate polymer block (g1-2) are both 40,000, the Mw(g1-total) is 80,000.

(Synthesis Example 6) [Block copolymer (G-2)]

1,040 g of dry toluene, 10 g of 1,2-dimethoxyethane, 45 g of a toluene solution containing 30 mmol of isobutyl-bis(2,6-di-tert-butyl-4-methylphenoxy)aluminum, 7.3 mmol of sec-butyl lithium and 64 g of methyl methacrylate were added in that order to a vessel the interior of which had been deaerated, and reacted for 1 hour at room temperature. The weight-average molecular weight Mw(g1-1) of the polymer contained in the reaction solution was 9,700.

This reaction solution was then cooled to -25°C, and 184 g of n-butyl acrylate were added dropwise over the course of 2 hours. The weight-average molecular weight of the polymer contained in the reaction solution was 37,600. Since the weight-average molecular weight Mw(g1-1) of the methyl methacrylate polymer block was 9,700, the weight-average molecular weight Mw(g2) of the acrylic ester polymer block consisting of n-butyl acrylate was determined to be 27,900.

161 g of methyl methacrylate were then added, and the reaction solution was returned to room temperature and stirred for 8 hours to form a second methacrylic ester polymer block. 4 g of methanol was then added to the reaction solution to stop polymerization, after which the reaction solution was poured into a large quantity of methanol, and the filtrate was dried for 12 hours at 80°C, 1 torr to isolate a block copolymer (G-2). Since the weight-average molecular weight of the resulting block copolymer (G-2) was 62,000, the weight-average molecular weight Mw(g1-2) of the methyl methacrylate polymer block was determined to be 24,400. The ratio Mw/Mn of the weight-average molecular weight to the number-average molecular weight of the block copolymer (G-2) was 1.11.

(Synthesis Example 7) [Block copolymer (G-3)]

1,040 g of dry toluene, 10 g of 1,2-dimethoxyethane, 48 g of a toluene solution containing 30 mmol of isobutyl-bis(2,6-di-tert-butyl-4-methylphenoxy)aluminum, 8.1 mmol of sec-butyl lithium and 72 g of methyl methacrylate were added in that order to a vessel the interior of which had been deaerated, and reacted for 1 hour at room temperature. The weight-average molecular weight Mw(g1-1) of the polymer contained in the reaction solution was 9,900.

This reaction solution was then cooled to -25°C, and 307 g of n-butyl acrylate were added dropwise over the course of 2 hours. The weight-average molecular weight of the polymer contained in the reaction solution was 32,300. Since the weight-average molecular weight Mw(g1-1) of the methyl methacrylate polymer block was 9,900, the weight-average molecular weight Mw(g2) of the acrylic ester polymer block consisting of n-butyl acrylate was determined to be 42,200.

72 g of methyl methacrylate were then added, and the reaction solution was returned to room temperature and stirred for 8 hours to form a second methacrylic ester polymer block. 4 g of methanol was then added to the reaction solution to stop polymerization, after which the reaction solution was poured into a large quantity of methanol, and the filtrate was dried for 12 hours at 80°C, 1 torr to isolate a block copolymer (G-3). Since the weight-average molecular weight of the resulting block copolymer (G-3) was 62,000, the weight-average molecular weight Mw(gl-2) of the methyl methacrylate polymer block was determined to be 9,900. The ratio Mw/Mn of the weight-average molecular weight to the number-average molecular weight of the block copolymer (G-3) was 1.19.

(Synthesis Example 8) [Multilayer structure (E-1)]

1,050 mass parts of ion-exchange water, 0.5 mass parts of sodium dioctylsulfosuccinate and 0.7 mass parts of sodium carbonate were loaded into a reaction vessel equipped with a stirrer, a thermometer, a nitrogen gas introduction pipe, a monomer introduction pipe and a reflux condenser, the interior of the vessel was thoroughly purged with nitrogen gas, and the internal temperature was then set to 80°C. 0.25 mass parts of potassium persulfate were added to the mixture, which was then stirred for 5 minutes, after which 245 mass parts of a monomer mixture consisting of a 94 : 5.8 : 0.2 mass ratio of methyl methacrylate : methyl acrylate : allyl methacrylate were added continuously dropwise over the course of 50 minutes, and after completion of dropping, the polymerization reaction was continued for 30 minutes.

0.32 mass parts of potassium peroxodisulfate were added to the same reaction vessel and stirred for 5 minutes, after which 315 mass parts of a monomer mixture consisting of 80.6 mass% butyl acrylate, 17.4 mass% styrene and 2 mass% allyl methacrylate were added continuously dropwise over the course of 60 minutes, and after completion of dropping, the polymerization reaction was continued for 30 minutes.

Next, 0.14 mass parts of potassium peroxodisulfate were added to the same reaction vessel and stirred for 5 minutes, after which 140 mass parts of a monomer mixture consisting of a 94 : 6 mass ratio of methyl methacrylate : methyl acrylate were supplied continuously dropwise over the course of 30 minutes, and after completion of dropping, the polymerization reaction was continued for 60 minutes to obtain a multilayer structure (E-1).

(Manufacturing Example 1) [Thermoplastic polymer composition (X-1)]

100 mass parts of the thermoplastic elastomer (A-1) obtained in Synthesis Example 1, 19 mass parts of the polyvinyl acetal resin (B-1) obtained in Synthesis Example 2 and 25 mass parts of the polar group-containing polypropylene-based resin (B-2) obtained in Synthesis Example 3 were melt kneaded at 230°C in a twin-screw extruder (here and in the following manufacturing examples, Toshiba Machine Co., Ltd.; TEM-28), extruded in strands and cut to manufacture pellets of a thermoplastic polymer composition (X-1).

(Manufacturing Example 2) [Amorphous resin (Y-1)]

80 mass parts of the methacrylic resin (F-1) obtained in Synthesis Example 4 and 20 mass parts of the block copolymer (G-1) obtained in Synthesis Example 5 were melt kneaded at 230°C with a twin-screw extruder, extruded in strands and cut to manufacture pellets of an amorphous resin (Y'-1).

Next, 100 mass parts of this amorphous resin (Y'-1) and 2 mass parts of carbon black (Mitsubishi Chemical Corporation; #980) were melt kneaded at 200°C with a twin-screw extruder, extruded in strands and cut to obtain pellets of an amorphous resin (Y-1) with a Tg of 126°C.

(Manufacturing Example 3) [Amorphous resin (Y-2)]

Pellets of an amorphous resin (Y-2) with a Tg of 126°C were obtained as in the Manufacturing Example 2 except that the amount of the carbon black in Manufacturing Example 2 was changed from 2 mass parts to 0.5 mass parts.

(Manufacturing Example 4) [Amorphous resin (Y-3)]

Pellets of an amorphous resin (Y-3) with a Tg of 126°C were obtained as in Manufacturing Example 2 except that the amount of the carbon black in Manufacturing Example 2 was changed from 2 mass parts to 12 mass parts.

(Manufacturing Example 5) [Amorphous resin (Y-4)]

30 mass parts of a methacrylic resin (Kuraray Co., Ltd.; Parapet H1000B, MFR 22g/10 min at 230°C, load 37.3 N), 50 mass parts of the block copolymer (G-2) obtained in Synthesis Example 6, 20 mass parts of the block copolymer (G-3) obtained in Synthesis Example 7 and 2 mass parts of carbon black (Mitsubishi Chemical Corporation; #980) were melt kneaded at 230°C with a twin-screw extruder, extruded in strands and cut to obtain pellets of an amorphous resin (Y-4) with a Tg of 125°C.

(Manufacturing Example 6) [Amorphous resin (Y-5)]

88 mass parts of the methacrylic resin (F-1), 12 mass parts of the multilayer structure (E-1) and 2 mass parts of carbon black (Mitsubishi Chemical Corporation; #980) were melt kneaded at 230°C with a twin-screw extruder, extruded in strands and cut to obtain pellets of an amorphous resin (Y-5) with a Tg of 129°C.

(Manufacturing Example 7) [Amorphous resin (Y-6)]

Pellets of an amorphous resin (Y-6) with a Tg of 129°C were obtained as in Manufacturing Example 6 except that the 88 mass parts of the methacrylic resin (F-1) in Manufacturing Example 6 were changed to 80 mass parts, and the 12 mass parts of the multilayer structure (E-1) were changed to 20 mass parts.

(Manufacturing Example 8) [Amorphous resin (Y-7)]

Pellets of an amorphous resin (Y-7) with a Tg of 129°C were obtained as in Manufacturing Example 6 except that the 88 mass parts of the methacrylic resin (F-1) in Manufacturing Example 6 were changed to 72 mass parts, and the 12 mass parts of the multilayer structure (E-1) were changed to 28 mass parts.

(Manufacturing Example 9) [Amorphous resin (Y-8)]

100 mass parts of polyethylene terephthalate (Kuraray Co., Ltd.; Kurapet KS760K) and 2 mass parts of Carbon Black (Mitsubishi Chemical Corporation; #980) were melt kneaded at 230°C with a twin-screw extruder, extruded in strands and cut to obtain pellets of an amorphous resin (Y-8) with a Tg of 75°C.

(Example 1)

Pellets of the thermoplastic polymer composition (X-1) obtained in Manufacturing Example 1 and pellets of the amorphous resin (Y-1) obtained in Manufacturing Example 2 were each loaded into a hopper of a single-screw extruder (G.M Engineering; VGM25-28EX), and coextruded with a multi-manifold die to obtain a multilayer film 30 cm wide and 250 μm thick. The thickness of each layer was controlled by means of the extrusion flow volume, and the adhesive layer was 100 μm thick while the base layer was 150 μm thick. The evaluation results for the resulting multilayer film are shown in Table 1.

Next, a molded body was manufactured from the resulting multilayer film. That is, TOM forming was performed using a forming machine (Fu-se Vacuum Forming Ltd.; NGF-0406-T) that forms a chamber box (C) by closing a chamber box (C1) and a chamber box (C2). A sheet-shaped adherend (length 150 mm × width 25 mm × thickness 0.3 mm) made of polypropylene resin (Japan Polypropylene Corporation; MA03) was placed together with the resulting multilayer film in the chamber box (C2) of the forming machine with the adhesive layer of the multilayer film facing the adherend, the multilayer film was sandwiched between the chamber box (C1) and chamber box (C2) so that the multilayer film bisected the chamber box (C), and the chamber box (C1) and chamber box (C2) were closed to form the chamber box (C). The chamber box (C) was then depressurized to 0.5 kPa over the course of 90 seconds. Because the non-equilibrium of depressurization and the weight of the multilayer film itself can cause the multilayer film to warp, the pressuresinside the chamber box (C1) and chamber box (C2) were adjusted appropriately to keep the multilayer film level. During depressurization the multilayer film was also heated for 120 seconds with an infrared heating device, and once the temperature of the multilayer film had reached 130°C the interior of the chamber box (C1) was immediately returned to atmospheric pressure to thereby overlay the adherend with the multilayer film and form a molded body including the multilayer film adhering to the adherend without elongation. The temperature of the multilayer film was measured with a radiation thermometer. The chamber box (C) was then opened and the molded body was removed from the chamber box (C2). The evaluation results for the resulting molded body are shown in Table 1.

A molded body including the multilayer film adhering to the adherend without elongation was also manufactured by the same molded body manufacturing method except that a convex metal mold (length 250 mm × width 160 min × depth 25 mm) was placed together with the adherend in the chamber box (C2), and the adherend was set in the bottom of this metal mold. The evaluation results for the resulting molded body are shown in Table 1.

(Examples 2 to 6)

Multilayer films and molded bodies were obtained as in Example 1 except that the thicknesses of the adhesive layers and multilayer films were changed as shown in Table 1.

(Examples 7 and 8)

Multilayer films and molded bodies were obtained as in Example 1 except that the thicknesses of the base layers and multilayer films were changed as shown in Table 1.

(Examples 9 to 12)

Multilayer films and molded bodies were obtained as in Example 1 except that the amorphous resin (Y-1) was changed as shown in Table 1.

(Comparative Example 1)

A multilayer film was obtained as in Example 1 except that the thickness of the base layer in Example 1 was changed from 150 μm to 600 μm, and the thickness of the multilayer film was changed from 250 μm to 700 μm. When the resulting multilayer film was subjected to TOM forming as in Example 1, a molded body was obtained including the multilayer film adhering to the adherend without elongation, but when a convex metal mold was placed in the chamber box (C2) together with the adherend and the adherend was set in the bottom of the mold to create conditions that stretched the film, the multilayer film broke at all temperatures between 110°C and 160°C, and molded bodies were not obtained.

(Comparative Example 2)

A multilayer film was obtained as in Example 1 except that the amorphous resin (Y-3) obtained in Manufacturing Example 4 was substituted for the amorphous resin (Y-1) of Example 1. When the resulting multilayer film was subjected

to TOM forming as in Example 1, a molded body was obtained including the multilayer film adhering to the adherend without elongation, but when a convex metal mold was placed in the chamber box (C2) together with the adherend and the adherend was set in the bottom of the mold to create conditions that stretched the film, the multilayer film broke at all temperatures between 110°C and 160°C, and molded bodies were not obtained.

(Comparative Example 3)

A multilayer film was obtained as in Example 1 except that the amorphous resin (Y-4) obtained in Manufacturing Example 5 was substituted for the amorphous resin (Y-1) of Example 1. When the resulting multilayer film was subjected to TOM forming as in Example 1, molded bodies including the multilayer film adhering to the adherend without elongation was obtained at all temperatures between 110°C and 160°C. Molded bodies including the multilayer film adhering to the adherend with elongation were obtained without difficulty at 110°C to 140°C, but at 150°C and 160°C the multilayer film drooped and multiple wrinkles occurred in the molded body.

(Comparative Example 4)

A multilayer film was obtained as in Example 1 except that the amorphous resin (Y-8) obtained in Manufacturing Example 9 was substituted for the amorphous resin (Y-1) of Example 1. When the resulting multilayer film was subjected to TOM forming as in Example 1, a molded body was obtained including the multilayer film adhering to the adherend without elongation, but when a convex metal mold was placed in the chamber box (C2) together with the adherend and the adherend was set in the bottom of the mold to create conditions that stretched the film, the multilayer film broke at all temperatures between 110°C and 160°C, and molded bodies were not obtained.

[Table 1]

| | Example 1 | Example 2 | Example 3 | Example 4 | Example 5 | Example 6 | Example 7 | Example 8 | Example 9 | Example 10 | Example 11 | Example 12 | Comparative Example 1 | Comparative Example 2 | Comparative Example 3 | Comparative Example 4 |
|---|---|---|---|---|---|---|---|---|---|---|---|---|---|---|---|---|
| Base layer (amorphous resin) | | | | | | | | | | | | | | | | |
| (Y-1) : Manufacturing Example 2 | ○ | ○ | ○ | ○ | ○ | ○ | ○ | ○ | | | | | ○ | | | |
| (Y-2) : Manufacturing Example 3 | | | | | | | | | ○ | | | | | | | |
| (Y-3) : Manufacturing Example 4 | | | | | | | | | | | | | | ○ | | |
| (Y-4) : Manufacturing Example 5 | | | | | | | | | | | | | | | ○ | |
| (Y-5) : Manufacturing Example 6 | | | | | | | | | | ○ | | | | | | |
| (Y-6) : Manufacturing Example 7 | | | | | | | | | | | ○ | | | | | |
| (Y-7) : Mariufacturing Example 8 | | | | | | | | | | | | ○ | | | | |
| (Y-8) : Manufacturing Example 9 | | | | | | | | | | | | | | | | ○ |
| Elastic modulus (110°C) [MPa] | 593 | 593 | 593 | 593 | 593 | 593 | 593 | 593 | 585 | 575 | 551 | 432 | 593 | 645 | 195 | 471 |

(continued)

| | Example 1 | Example 2 | Example 3 | Example 4 | Example 5 | Example 6 | Example 7 | Example 8 | Example 9 | Example 10 | Example 11 | Example 12 | Comparative Example 1 | Comparative Example 2 | Comparative Example 3 | Comparative Example 4 |
|---|---|---|---|---|---|---|---|---|---|---|---|---|---|---|---|---|
| Base layer (amorphous resin) | | | | | | | | | | | | | | | | |
| Elastic modulus (160°C) [MPa] | 2 | 2 | 2 | 2 | 2 | 2 | 2 | 2 | 2 | 2 | 2 | 2 | 2 | 2 | 1 | 140 |
| Thickness of base layer [μm] | 150 | 150 | 150 | 150 | 150 | 150 | 80 | 300 | 150 | 150 | 150 | 150 | 600 | 150 | 150 | 150 |
| Adhesive layer (thermoplastic polymer composition (X-1)) | | | | | | | | | | | | | | | | |
| Thickness of adhesive layer [μm] | 100 | 70 | 30 | 10 | 200 | 800 | 100 | 100 | 100 | 100 | 100 | 100 | 100 | 100 | 100 | 100 |
| Physical properties evaluation of multilayer film | | | | | | | | | | | | | | | | |
| Thickness ratio (base layer/adhesive layer) | 1.5 | 2.1 | 5.0 | 15.0 | 0.8 | 0.2 | 0.8 | 3.0 | 1.5 | 1.5 | 1.5 | 1.5 | 6.0 | 1.5 | 1.5 | 1.5 |
| Elongation at break[%] | 200 | 200 | 200 | 200 | 200 | 200 | 200 | 160 | 250 | 260 | 280 | 300 | 100 | 140 | >300 | 150 |
| Pencil hardness on base layer side | H | H | H | H | B | 4B | B | H | H | H | H | H | H | H | 6B | H |
| Shielding | A+ | A+ | A+ | A+ | A+ | A+ | A | A+ | A | A+ | A+ | A+ | A+ | A+ | A+ | A+ |
| Three-dimensional covering formability | A | A | A | A | A | A | A | A | A | A | A | A | B | B | B | B |

(continued)

| Physical properties evaluation of multilayer film | | | | | | | | | | | | | | | | |
|---|---|---|---|---|---|---|---|---|---|---|---|---|---|---|---|---|
| PP adhesive strength[N/25mm] | 48 | 45 | 40 | 38 | >50 | >50 | 48 | 48 | 48 | 48 | 48 | 48 | 48 | 48 | 48 | 48 |
| PP adhesive strength (with elongation)[N/25mm] | 21 | 20 | 18 | 15 | 26 | >50 | 21 | 21 | 21 | 21 | 21 | 21 | - | - | 21 | - |

The results of Table 1 show that the multilayer films obtained in Examples 1 to 12 had excellent extensibility, shielding properties, three-dimensional overlaying formability and adhesiveness. In Examples 1 to 3 and 5 to 12, the adhesive strength was high because the thermoplastic polymer composition forming the adhesive layer was thick. In Comparative Examples 1, 2 and 4, extensibility was low, the film broke during TOM forming and formability was poor. In Comparative Example 3, because the elastic modulus was low at high temperatures, the film drooped and wrinkled during TOM forming at 150°C and above.

(Reference Example 1)

The elastic modulus of the base material obtained in Manufacturing Example 2 was 1 MPa at 170°C. When TOM forming was performed as in Example 1 except that the heating temperature of the multilayer film was changed from 130°C to 170°C, the multilayer film drooped and multiple wrinkles appeared in the molded body.

(Reference Example 2)

The elastic modulus of the base material obtained in Manufacturing Example 2 at 100°C was 1,010 MPa. When TOM forming was performed as in Example 1 except that the heating temperature of the multilayer film was changed from 130°C to 100°C, a molded body including the multilayer film adhering to the adherend without elongation was obtained, but when a convex metal mold was placed in the chamber box (C2) together with the adherend and the adherend was set in the bottom of the mold to create conditions that stretched the film, the multilayer film broke and a molded body was not obtained.

**Claims**

1. A multilayer film comprising:

   an adhesive layer formed of a thermoplastic polymer composition containing a thermoplastic elastomer (A), which is a block copolymer or a hydrogenated block copolymer having a polymer block (a1) containing an aromatic vinyl compound unit and a polymer block (a2) containing a conjugated diene compound unit; and
   a base layer formed of an amorphous resin having an elastic modulus of 2 to 600 MPa at an arbitrary temperature of 110°C to 160°C,
   wherein elongation at break of the multilayer film at a temperature lower by 5°C than glass transition temperature of the amorphous resin is at least 160%;
   the polymer block (a2) containing the conjugated diene compound unit is a polymer block containing an isoprene unit, a butadiene unit or isoprene/butadiene units in which 1,2 bonds and 3,4 bonds together constitute at least 40 mol% of the bonds;
   the thermoplastic polymer composition contains an adhesion imparting component (B) that is a polyvinyl acetal resin (B1) and/or a polar group-containing polypropylene resin (B2) in an amount of 10 to 100 mass parts per 100 mass parts of the thermoplastic elastomer (A);
   a thickness of the base layer is in the range of 10 to 500 μm; and
   the elastic modulus and the elongation at break are determined as disclosed in the description.

2. The multilayer film according to Claim 1, wherein the thermoplastic polymer composition further contains a polar group-containing polyolefin-based copolymer (C) (which is different from the polar group-containing polypropylene-based resin (B2)).

3. The multilayer film according to Claim 1 or 2, which is a decorative film.

4. The multilayer film according to any one of Claims 1 to 3, wherein the base layer is obtained by mixing 1 to 10 mass parts of a colorant per 100 mass parts of the amorphous resin.

5. The multilayer film according to any one of Claims 1 to 4, wherein a ratio of thickness of the base layer to thickness of the adhesive layer is in a range of 0.2 to 5.

6. The multilayer film according to any one of Claims 1 to 5, the total thickness of which is less than 1,000 μm.

7. The multilayer film according to any one of Claims 1 to 6, wherein pencil hardness on the base layer side is at least HB.

**8.** A method for manufacturing the multilayer film of Claim 1 by co-extruding an amorphous resin with an elastic modulus of 2 to 600 MPa at an arbitrary temperature of 110°C to 160°C together with a thermoplastic polymer composition containing a thermoplastic elastomer (A) that is a block copolymer or a hydrogenated block copolymer having a polymer block (a1) containing an aromatic vinyl compound unit and a polymer block (a2) containing a conjugated diene compound unit.

**9.** A molded body comprising a multilayer film of any one of Claims 1 to 7 and an adherend.

**10.** A method for manufacturing a molded body, the method comprising:

a step of enclosing the multilayer film of any one of Claims 1 to 7 and an adherend in a chamber box;
a step of reducing pressure inside the chamber box;
a step of bisecting the chamber box by the multilayer film, and
a step of increasing the pressure in the chamber box not having the adherend higher than the pressure in the chamber box having the adherend, to thereby overlay the adherend with the multilayer film.

**11.** The method of manufacturing a molded body according to Claim 10, further comprising a step of softening the multilayer film by heating to within a range of 110°C to 160°C.

**Patentansprüche**

**1.** Mehrschichtfolie, umfassend:

eine Haftmittelschicht, gebildet aus einer thermoplastischen Polymerzusammensetzung, enthaltend ein thermoplastisches Elastomer (A), das ein Blockcopolymer oder ein hydriertes Blockcopolymer mit einem Polymerblock (a1), enthaltend eine Einheit einer aromatischen Vinylverbindung, und einem Polymerblock (a2), enthaltend eine Einheit einer konjugierten Dienverbindung, ist; und
eine Basisschicht, gebildet aus einem amorphen Harz mit einem Elastizitätsmodul von 2 bis 600 MPa bei einer beliebigen Temperatur von 110°C bis 160°C,
wobei die Bruchdehnung der Mehrschichtfolie bei einer Temperatur, die um 5°C niedriger ist als die Glasübergangstemperatur des amorphen Harzes, mindestens 160 % beträgt;
der Polymerblock (a2), enthaltend die Einheit einer konjugierten Dienverbindung, ein Polymerblock ist, der eine Isopreneinheit, eine Butadieneinheit oder Isopren/Butadien-Einheiten enthält, in denen 1,2-Bindungen und 3,4-Bindungen zusammen mindestens 40 Mol-% der Bindungen ausmachen;
die thermoplastische Polymerzusammensetzung eine haftvermittelnde Komponente (B), die ein Polyvinylacetalharz (B1) und/oder ein polare Gruppen enthaltendes Polypropylenharz (B2) ist, in einer Menge von 10 bis 100 Massenteilen pro 100 Massenteile des thermoplastischen Elastomers (A) enthält;
eine Dicke der Basisschicht im Bereich von 10 bis 500 μm) liegt; und
der Elastizitätsmodul und die Bruchdehnung wie in der Beschreibung angegeben bestimmt werden.

**2.** Mehrschichtfolie nach Anspruch 1, wobei die thermoplastische Polymerzusammensetzung weiter ein polare Gruppen enthaltendes Copolymer auf Polyolefinbasis (C) enthält (das sich von dem polare Gruppen enthaltenden Harz auf Polypropylenbasis (B2) unterscheidet).

**3.** Mehrschichtfolie nach Anspruch 1 oder 2, die eine Dekorfolie ist.

**4.** Mehrschichtfolie nach einem der Ansprüche 1 bis 3, wobei die Basisschicht durch Mischen von 1 bis 10 Massenteilen eines Farbstoffs pro 100 Massenteile des amorphen Harzes erhalten wird.

**5.** Mehrschichtfolie nach einem der Ansprüche 1 bis 4, wobei ein Verhältnis der Dicke der Basisschicht zur Dicke der Haftmittelschicht in einem Bereich von 0,2 bis 5 liegt.

**6.** Mehrschichtfolie nach einem der Ansprüche 1 bis 5, deren Gesamtdicke weniger als 1000 μm beträgt.

**7.** Mehrschichtfolie nach einem der Ansprüche 1 bis 6, wobei eine Bleistifthärte auf der Seite der Basisschicht mindestens HB beträgt.

**8.** Verfahren zur Herstellung der Mehrschichtfolie nach Anspruch 1 durch Coextrudieren eines amorphen Harzes mit einem Elastizitätsmodul von 2 bis 600 MPa bei einer beliebigen Temperatur von 110°C bis 160°C zusammen mit einer thermoplastischen Polymerzusammensetzung, enthaltend ein thermoplastisches Elastomer (A), das ein Blockcopolymer oder ein hydriertes Blockcopolymer mit einem Polymerblock (a1), enthaltend eine Einheit einer aromatischen Vinylverbindung, und einem Polymerblock (a2), enthaltend eine Einheit einer konjugierten Dienverbindung, ist.

**9.** Formkörper, umfassend eine Mehrschichtfolie nach einem der Ansprüche 1 bis 7 und ein Anhaftungsstück.

**10.** Verfahren zur Herstellung eines Formkörpers, wobei das Verfahren umfasst:

einen Schritt des Einschließens der Mehrschichtfolie nach einem der Ansprüche 1 bis 7 und eines Anhaftungsstücks in einen Kammerkasten;
einen Schritt des Reduzierens des Drucks im Inneren des Kammerkastens;
einen Schritt des Zweiteilens des Kammerkastens durch die Mehrschichtfolie, und
einen Schritt des Erhöhens des Drucks in dem Kammerkasten, in dem sich das Anhaftungsstück nicht befindet, auf einen höheren Wert als den Druck in dem Kammerkasten, in dem sich das Anhaftungsstück befindet, um dadurch das Anhaftungsstück mit der Mehrschichtfolie zu überlagern.

**11.** Verfahren zur Herstellung eines Formkörpers nach Anspruch 10, das weiter einen Schritt des Erweichens der Mehrschichtfolie durch Erwärmen auf einen Wert in einem Bereich von 110°C bis 160°C umfasst.

**Revendications**

**1.** Film multicouche comprenant :

une couche adhésive formée d'une composition de polymère thermoplastique contenant un élastomère thermoplastique (A), lequel est un copolymère séquencé ou un copolymère séquencé hydrogéné ayant une séquence de polymère (a1) contenant un motif de composé vinylaromatique et une séquence de polymère (a2) contenant un motif de composé diène conjugué ; et
une couche de base formée d'une résine amorphe présentant un module d'élasticité allant de 2 à 600 MPa à une température arbitraire de 110°C à 160°C,
dans lequel l'allongement à la rupture du film multicouche à une température abaissée de 5°C en dessous de la température de transition vitreuse de la résine amorphe est d'au moins 160% ;
la séquence de polymère (a2) contenant le motif de composé diène conjugué est une séquence de polymère contenant un motif isoprène, un motif butadiène ou des motifs isoprène/butadiène dans lesquels des liaisons 1,2 et des liaisons 3,4 constituent ensemble au moins 40% en mole des liaisons ;
la composition de polymère thermoplastique contient un composant conférant une adhérence (B) qui est une résine de polyvinyle acétal (B1) et/ou une résine de polypropylène contenant un groupement polaire (B2) dans une quantité allant de 10 à 100 parties en masse pour 100 parties en masse de l'élastomère thermoplastique (A) ;
l'épaisseur de la couche de base se situe dans l'intervalle compris entre 10 et 500 μm ; et
le module d'élasticité et l'allongement à la rupture sont déterminés comme c'est décrit dans la description.

**2.** Film multicouche selon la revendication 1, dans lequel la composition de polymère thermoplastique contient en outre un copolymère à base de polyoléfine contenant un groupement polaire (C) (lequel est différent de la résine à base de polypropylène contenant un groupement polaire (B2)).

**3.** Film multicouche selon la revendication 1 ou 2, lequel est un film décoratif.

**4.** Film multicouche selon l'une quelconque des revendications 1 à 3, dans lequel la couche de base est obtenue en mélangeant 1 à 10 parties en masse d'un colorant pour 100 parties en masse de la résine amorphe.

**5.** Film multicouche selon l'une quelconque des revendications 1 à 4, dans lequel le rapport d'épaisseur de la couche de base à l'épaisseur de la couche adhésive se situe dans l'intervalle compris entre 0,2 et 5.

**6.** Film multicouche selon l'une quelconque des revendications 1 à 5 dont l'épaisseur totale est inférieure à 1000 μm.

7. Film multicouche selon l'une quelconque des revendications 1 à 6, dans lequel la dureté au crayon sur le côté couche de base est au moins HB.

8. Procédé de fabrication du film multicouche selon la revendication 1 par co-extrusion d'une résine amorphe présentant un module d'élasticité allant de 2 à 600 MPa à une température arbitraire de 110°C à 160°C avec une composition de polymère thermoplastique contenant un élastomère thermoplastique (A), lequel est un copolymère séquencé ou un copolymère séquencé hydrogéné ayant une séquence de polymère (a1) contenant un motif de composé vinylaromatique et une séquence de polymère (a2) contenant un motif de composé diène conjugué.

9. Corps moulé comprenant un film multicouche selon l'une quelconque des revendications 1 à 7 et une surface à coller.

10. Procédé de fabrication d'un corps moulé, le procédé comprenant :

une étape où l'on enferme le film multicouche selon l'une quelconque des revendications 1 à 7 et une surface à coller dans une boîte formant chambre ;
une étape où l'on réduit la pression à l'intérieur de la boîte formant chambre ;
une étape où l'on coupe en deux parties la boîte formant chambre par le film multicouche, et
une étape où l'on augmente la pression dans la boîte formant chambre n'ayant pas de surface à coller pour qu'elle soit plus haute que la pression dans la boîte formant chambre ayant la surface à coller pour ainsi recouvrir la surface à coller avec le film multicouche.

11. Procédé de fabrication d'un corps moulé selon la revendication 10, comprenant en outre une étape où l'on ramollit le film multicouche en chauffant entre 110°C et 160°C.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2014168940 A
- JP 2012213911 A
- JP S5627378 B
- JP 2002067137 A
- JP 2005262502 A